# EUROPÄISCHE PATENTSCHRIFT

(11) **EP 0 381 979 B1**
(45) Veröffentlichungstag und Bekanntmachung des Hinweises auf die Patenterteilung: **28.04.1993**
(21) Anmeldenummer: 90101186.6
(22) Anmeldetag: 22.01.1990
(51) Int. Cl.: F16L 33/26, F16L 37/08

(54) **Anschlussarmatur für umfangsgerippte Schläuche oder Rohre**
Connection accouterments for circumferentially corrugated hoses or pipes
Robinetterie de raccordement pour tuyaux souples ou conduits cannelés circonférentiels

(30) Priorität: 04.02.1989 DE 3903355
(43) Veröffentlichungstag der Anmeldung: 16.08.1990
(73) Patentinhaber: Anton Hummel Verwaltungs-GmbH, D-79183 Waldkirch (DE)
(72) Erfinder: Gehring, Peter, D-7809 Simonswald-Griesbach (DE)
(74) Vertreter: Patent- und Rechtsanwaltssozietät, Schmitt, Maucher & Börjes

(56) Entgegenhaltungen:
- EP-A- 0 046 616
- CH-A- 379 854
- DE-A- 3 626 403
- GB-A- 836 171
- GB-A- 998 128
- GB-A- 1 294 859
- GB-A- 1 437 725
- US-A- 1 649 594
- US-A- 4 575 133

## Beschreibung

Die Erfindung betrifft eine Anschlußarmatur für umfangsgerippte Schläuche oder Rohre, insbesondere für flexible Wellschläuche, gemäß dem Oberbegriff des Patentanspruches 1.

Aus der US-A-4 575 133 ist eine derartige Anschlußarmatur bekannt. Treten dabei Halte- und Zugkräfte an den Wellschläuchen in axialer Richtung auf, werden demgegenüber querverlaufende und federnde Zungen auch in axialer Richtung verformt. Dabei ist nicht ausgeschlossen, daß eine solche Zunge sich bei ihrer seitlichen Verbiegung in axialer Richtung auch in radialer Richtung verformt, insbesondere dann, wenn sie mit dem ihr benachbarten Hülsenrand in Berührung kommt und eventuell vorher nicht vollständig in ein Wellental des Wellschlauches eingerastet und eingetreten ist.

Dabei ist in dieser US-A-4 575 133 ein in ein Wellental einzuführender Rastvorsprung mit einer Schräge vorgesehen, die bis in den Bereich des Hülsenmantels reicht. Wenn diese Schräge des Rastvorsprunges durch eine axiale und gleichzeitig radiale Verformung der Haltezunge bei den Hülsenmantel übergreifendem Wellschlauch etwas unter den Hülsenmantel gerät oder bei umgekehrter Anordnung mit eingeschobenem Wellschlauch entsprechend umgekehrt über den Hülsenmantel verformt wird, kann der Rastvorsprung bei entsprechend starker axialer Belastung zu weit verschoben werden, so daß die gewünschte Verbindung gelöst wird.

Der Erfindung liegt die Aufgabe zugrunde, eine Anschlußarmatur der eingangs erwähnten Art zu schaffen, bei welcher ein ausreichend langer Vorsprung als Halteelement Verwendung finden kann, die aber in axialer Richtung dennoch wenig Platz benötigt und auch an einer sehr kurzen Hülse untergebracht werden kann. Dennoch soll die Sperrwirkung und Haltekraft bei hohen axialen Belastungen nicht vermindert, sondern sogar erhöht sein.

Die Lösung dieser Aufgabe erfolgt bei einer Anschlußarmatur der eingangs erwähnten Art mit den Mitteln des kennzeichnenden Teiles des Patentanspruches 1.

Diese Maßnahmen haben zur Folge, daß bei einer Verformung der Zunge in axialer Richtung durch die Berührung an den Rändern und deren schrägen Verlauf gegenüber einer Querschnittsebene die Zunge radial nach innen gebogen wird, wodurch der rippenartige Vorsprung entsprechend fest in das von ihm beaufschlagte Wellental gedrückt wird, so daß also bei einer solchen Axialbelastung des Wellschlauches automatisch und gleichzeitig die Sperrung und Haltekraft vergrößert wird. Durch die Orientierung der Zunge in Umfangsrichtung kann diese und der an ihr vorgesehene Vorsprung eine relativ große Länge haben, ohne daß die axiale Erstreckung groß sein muß. Ist die Zunge schmal, kann sie also an einer entsprechend kurzen Hülse untergebracht werden und dennoch aufgrund ihrer großen Länge eine entsprechend große und sich bei starker Verformung vergrößernde Haltekraft und Sperrwirkung haben. Dabei ist der Feder- oder Gelenkbereich und somit die Achse, um welche die Zunge beim Ausfedern verschwenkt wird, etwa axial am Hülsenmantel orientiert.

Die Längsseiten der Zunge und der Verlauf des rippenförmigen Vorsprunges können dabei etwa gleichgerichtet über einen Teil des Umfanges der Hülse angeordnet sein.

Für eine möglichst einfache Bedienung und evtl. auch eine selbsttätige Ausbiegung der Zunge beim Einführen des Wellschlauches ist es vorteilhaft, wenn zumindest der gelenkartige Federbereich breiter oder schmaler als die in Umfangsrichtung von ihm wegverlaufenden Zunge ist, so daß die Zunge in axialer Richtung schwächer oder stärker verschwenk- oder auslenkbar ist. Zusätzlich oder stattdessen kann der Federbereich bezüglich des Querschnittes verändert, dieser Querschnitt z.B. vermindert sein.

Ein automatisches Anheben der Zunge beim Einführen des Wellschlauches kann durch eine entsprechend schräge Gestaltung der Stirnseite des Wellschlauches oder Wellrohres erreicht werden. Es ist aber auch möglich oder kann zur Vereinfachung und Unterstützung dieses Effektes beitragen, wenn die zum Einführende der Hülse weisende Seitenfläche des Vorsprunges über wenigstens einen Teil seiner Höhe schräg von außen nach innen und dabei von dem Einsteckende weg verläuft. Dadurch wird die beim Einführen des Wellschlauches aufgebrachte Druckkraft teilweise in radiale Richtung umgelenkt und kann die federnde Zunge anheben.

Um bei der Montage und Demontage der Tatsache Rechnung zu tragen, daß die Anhebebewegung der federnden Zunge von ihrem freien Ende zu ihrem Federbereich oder Gelenkbereich hin abnimmt, ist es zweckmäßig, wenn der rippenförmige Vorsprung von dem freien Ende der Zuge zu dem Federbereich hin in seiner Höhe abnimmt und/oder mit Abstand vor dem Federbereich endet. Dadurch kann erreicht werden, daß beim Lösen der Verbindung die Zunge mit ihrem Vorsprung nicht allzuweit ausgebogen werden muß und auch bei mehreren derartigen Montage- und Demontagefällen ihre Federkraft nicht verliert.

Eine weitere zweckmäßige Ausgestaltung der Erfindung kann darin bestehen, daß der Federbereich der Zunge - aufgrund seiner Nachgiebigkeit durch Wandschwächung oder verminderte Breite od.dgl. Maßnahmen - bei axialer Belastung und Verstellung des Vorsprunges bereichsweise aufwölbbar bzw. verwindbar und demgemäß das freie Ende der Zunge mit dem Vorsprung axial verschwenkbar ist. Wird beipielsweise eine Zugkraft ausgeübt, kann also die Zunge etwas axial nachgeben, wobei sich der dem Einführende näherliegende Teil des Federbereiches aufwölben bzw. verwinden wird.Bei einer Druckkraft ist eine entsprechende umgekehrte Reaktion möglich. Somit kann das gesamte System auf Belastungen etwas nachgiebig reagieren.

Da sich jedoch nach einem kurzen Schwenkweg, den dieser Federbereich ohne weiteres auffangen kann, die Zunge an die gegenüberliegende schräge Wandung des Begrenzungsschlitzes anlegt, ist diese Belastung des Federbereiches aufgrund dieser Nachgiebigkeit begrenzt.

Dabei kann zumindest der Teilbereich der Umfangslänge der Zunge schräg angeordnet sein, in welchem der rippenförmige Vorsprung angeordnet ist.

Um die bei axialer Belastung angestrebte automatische Radialverstellung der Zunge noch sicherer und besser herbeizuführen, können dabei beide Begrenzungen des Schlitzes in gleicher Richtung schräg orientiert sein und vorzugsweise etwa parallel zueinander angeordnet sein, so daß sie sich gegenseitig auch über die gesamte Querschnittsdicke führen können.

Um bei der Selbstsicherung der Zunge und ihres Vorsprunges durch eine radiale Verformung der Zunge ins Hülseninnere die gute Anlage des Vorsprunges an der Welle zu verstärken, kann die der Einführung abgewandte Anschlagfläche des Haltevorsprunges im Querschnitt steiler als die andere Seitenfläche, vorzugsweise rechtwinklig zur Innenwand der Hülse oder in spitzem Winkel zu dieser Innenseite der Hülse angeordnet sein.

Somit bildet der Vorsprung an dieser Anschlagfläche, die bei einer axialen Zugkraft beaufschlagt wird, eine gewisse Hinterschneidung, die diese Seitenfläche auch bei einer radialen Verschwenkung der Zunge nach innen verstärkt wirksam werden läßt.

An sich ist die Axialverschwenkung und die daraus resultierende Radialverstellung der Zunge so gering, daß diese Bewegungen von dem Spiel zwischen Haltevorsprung und Abstand zweier Wellen des Wellschlauches sowie auch der Elatizität des Wellschlauchmantels aufgefangen werden kann. Es ist aber auch möglich, daß der Haltevorprung entgegen der axialen Verschwenkung der Zunge bei deren axialer Belastung schräg zum Hülsenumfang verläuft, so daß er erst nach dieser axialen Verschwenkung der Zunge etwa in Umfangsrichtung steht bzw. radial, d.h. rechtwinklig, zur Hülsenachse verläuft.

Für die erwähnte teilweise Axialverstellung der Zunge mit daraus bei Axialbelastung resultierender radialer Einziehung der Zunge ist es vorteilhaft, wenn der schräg orientierte Begrenzungsschlitz zwischen Zunge und Hülse, der dem Einsteckende der Hülse näherliegt - in dessen Richtung in aller Regel die Zugbelastungen an dem Wellschlauch oder Wellrohr auftreten - schmaler ist, als die Auslenkbarkeit der Zunge in axialer Richtung. Es könnte also zunächst einmal nahe dem Federbereich eine Schlitzung in radialer Richtung und daran anschließend eine schräge Schlitzung vorgesehen sein. Aus Gründen der Herstellungskosten kann jedoch der Begrenzungsschlitz auch über die gesamte Zungenlänge schräg orientiert sein.

Es können beide in Umfangsrichtung verlaufenden Begrenzungsschlitze der Zunge schräg und dabei insbesondere parallel zueinander angeordnet sein, wodurch die Zunge insgesamt nicht nur in Umfangsrichtung, sondern auch in axialer Richtung bogenförmig ist. Der Haltevorsprung behält dabei selbstverständlich seine in Umfangsrichtung verlaufende Orientierung. Ebenfalls können die beiden schrägen Begrenzungsschlitze der Zunge nicht parallel zueinander angeordnet sein, wodurch die Anbindung der Zunge schmaler oder breiter als der weitere Verlauf der Zunge wird. Selbstverständlich ist auch eine Kombination dieser Begrenzungsschlitz-Formen möglich, indem beispielsweise der in Einführrichtung erste Längs-Begrenzungsschlitz schräg und somit diese Längsseite der Zunge bogenförmig ist, während der abgewandte Schlitz genau radial oder in einer Durchmesserebene liegend geformt ist, so daß sich die Breite der Federzunge in ihrer etwa in Umfangsrichtung liegenden Orientierung ändert. Dabei kann auch wiederum der schräge Schlitz nur einen Teil, insbesondere den dem freien Ende der Zunge näherliegenden Teil betreffen und der weitere zum Federbereich führende Teilschlitz wiederum auf einer Querschnittsebene liegen.

All diese Variationen der vorbeschriebenen Merkmale insbesondere bezüglich der Begrenzungsschlitze und ihrer gegenseitigen Kombinationen richten sich jeweils danach, ob eine stärkere axiale Nachgiebigkeit der Zunge erwünscht ist oder nicht und auch danach, welche absolute Gesamtlänge die Zunge hat und wie ihre Federkraft und Federkonstante in Relation zur den gewünschten Haltekräften steht.

Eine weitere Verbesserung der Verankerung eines Wellschlauches kann dadurch erreicht werden, daß an der Innenseite des Hülsenmantels etwa gegenüber der über einen Teilbereich des Umfanges verlaufenden Zunge eine feste Halterippe mit vorzugsweise zu ihren beiden Enden hin sich vermindernder Höhe und insbesondere schräger Seitenfläche vorgesehen ist. Aufgrund seiner Elastizität kann der Wellschlauch beim Einführen diese einseitige feste Halterippe insbesondere dann, wenn ihre Höhe nicht zu groß ist und ihre seitlichen Enden verlaufen bzw. in der Höhe abnehmen, gut überwinden, zumal er gleichzeitig die Haltezunge mit dem daran befindlichen Haltevorsprung praktisch selbsttätig aus seinem Einführbereich ausheben kann. Ist dann die Haltezunge wieder eingeschnappt, ergibt sich auch beim Vorhandensein nur einer einzigen Haltezunge eine weitgehend symmetrische Verankerung und entsprechend feste Kupplung.

Eine andere oder zusätzliche Möglichkeit zur Verbesserung der Kupplungsverbindung, die dennoch leicht wieder lösbar und demontierbar ist, kann darin bestehen, daß an der Zunge in axialer Richtung hintereinander wenigstens zwei Haltevorsprünge vorgesehen sind, deren in Einsteckrichtung tieferliegender, in Gebrauchsstellung also dem Ende des Wellschlauches näherer Haltevorsprung in seinem mittleren Bereich vorzugsweise eine Lücke hat, die von dem in axialer Richtung und in Einführrichtung des Schlauches oder Rohres dahinter befindlichen Haltevorsprung überbrückt oder überlappt ist. Bei einer Zugkraft wird der Wellschlauch im Bereich der Lücke des ersten Haltevorsprunges versuchen, in diese Lücke auszuweichen, wodurch er sich also in diesem Bereich radial nach außen verformt. Dadurch wird er aber umso fester mit dem unmittelbar dahinter befindlichen zweiten Haltevorsprung gekuppelt.

Da die Zunge in Umfangsrichtung orientiert ist, kann sie - zur Verbesserung der Halte- und Kupplungskraft - in vorteilhafter Weise eine relativ große Länge haben, so daß der oder die an ihr befindlichen Vorsprünge ebenfalls relativ lang sein können insbesondere dann, wenn sie gegen das Federende hin in ihrer Höhe abnehmen.

Beispielsweise kann die Umfangslänge des Vorsprunges wenigstens etwa ein Fünftel, ein Viertel oder ein Drittel des Innendurchmessers der Hülse betragen. Es ist sogar möglich, daß die Umfangslänge des rippenförmigen Vorsprunges ungefähr gleich dem Durchmesser der Hülse ist oder etwa dem halben Umfang der Hülse entspricht oder sogar über mehr als den halben Umfang der Haltehülse reicht. Dies hat den weiteren Vorteil, daß die Armatur nur eine einzige Zunge benötigt, um eine erheblich größere Halte- und Kupplungskraft übertragen zu können, als dies mit axial orientierten Haltezungen möglich erscheint, obwohl dennoch die Demontage dann sehr einfach ist, weil sie von einer einzigen Person bewerkstelligt werden kann, die mit einer Hand diese einzige Zunge ausheben und mit der anderen Hand den Wellschlauch herausziehen kann.

Es ist aber vor allem auch aufgrund der Umfangsorientierung der erfindungsgemäßen Zunge ebenso möglich, wenigstens zwei Zungen vorzugsweise gegenläufig an der Hülse anzuordnen, so daß ihre Federbereiche nah beeinander liegen und ihre freien Enden wiederum mit einer Hand gleichzeitig erfaßt und ausgehoben werden können. Auch könnten diese zusätzlichen Zungen in axialer Richtung nebeneinander liegen, da sie in dieser axialen Richtung relativ wenig Platz brauchen. Dies könnte wiederum zu einer Steigerung der Haltekraft bei dennoch relativ leichter Demontierbarkeit benutzt werden.

Soll eine Demontage nur unter Zuhilfenahme eines Werkzeuges möglich sein, so wird die Zunge an ihrem freien Ende stirnseitig mit einer von außen nach innen, unter einem spitzen Winkel zur Hülseninnenseite verlaufender Fläche versehen. Damit die Länge der Zunge bestmöglich für einen möglichst langen rippenartigen Vorsprung ausgenutzt werden kann, dieser aber beim Ausschwenken der Zunge nicht mit dem dem freien Ende der Zunge gegenüberliegenden Begrenzungsrand der Hülse in Kollision gerät, ist es zweckmäßig, wenn das am freien Ende der Zunge befindliche Ende des oder der Vorsprünge insbesondere unter spitzem Winkel zur Hülseninnenseite gegen das Federende der Zunge hin geneigt ist.

Für eine definierte Halterung und auch eine Abdichtung wenigstens gegen Spritzwasser ist es zweckmäßig, wenn im Inneren der Hülse ein Innenanschlag für die Stirnseite des Wellschlauches vorgesehen ist und der Abstand der federnden Zunge und ihrer Schlitzbegrenzung von dem Stirnanschlag für den Schlauch so gewählt ist, daß eine Welle und ein Wellental des Schlauches oder Rohres dazwischen passen. Somit kann die Abdichtung schon durch die stirnseitige Anlage und einen eventuell dort vorgesehenen Dichtring bewirkt, erforderlichenfalls aber durch einen weiteren Dichtring, zum Beispiel in einem Wellental des Wellschlauches oder Wellrohres, verbessert werden.

Der Innenanschlag der Hülse kann eine ringnutförmige Einsenkung als Ringnut aufweisen, wobei vorzugsweise wenigstens eine der Nutenwände, zumindest bereichsweise insbesondere beide Nutenwände, in Einsteckrichtung des Wellschlauches im Sinne einer Verengung der Ringnut zu ihrem Boden hin schräg verläuft beziehungsweise verlaufen. beim Einstecken des Wellschlauches wird dieser dadurch allmählich mehr und mehr einer radialen Druckkraft von innen und/oder von außen ausgesetzt, was für sich alleine bereits zu einer Verbesserung der Dichtwirkung beiträgt. Zusätzlich kann in der Ringnut die schon erwähnte stirnseitige Dichtung angeordnet sein.
Daraus ergibt sich eine weitere Ausgestaltung dahingehend, daß die innere Nutenwand einen Innenstutzen begrenzt und als Stützhülse zum Eingriff in das Ende des Wellrohres oder -schlauches insbesondere verlängert und vorzugsweise konisch ist. Somit kann beim Einstecken des Wellrohres oder Wellschlauches dessen Ende auf diese Stützhülse auflaufen und dadurch etwa aufgeweitet oder radial nach außen unter Spannung gesetzt werden, wobei sich die Wellen ebenso etwas verformen können, wie dies bei einer Druckbelastung durch eine sich verjüngende äußere Nutenwand geschieht. Dieser Effekt kann sich sogar addieren, wenn beide Wandungen schräg zueinander stehen, so daß ohne einen Dichtring eine beachtliche Abdichtung des Endes des Wellrohres erreicht werden kann. Zusätzlich wird dadurch die Halterung verbessert, weil so auch sichergestellt wird, daß das Wellrohr eine gute und feste Anschlagposition erreicht hat, wenn der Haltevorsprung der Federzunge eingeschnappt ist.
Der kleinste Außendurchmesser des Innenstutzens, insbesondere an seiner Stirnseite, die gegen das Einführende der Hülse weist, kann kleiner oder gleich dem Innendurchmesser desjenigen Wellschlauches sein und der Außendurchmesser des Innenstutzens kann an seinem Ende im Bereich des Nutengrundes größer als der Innendurchmesser desjenigen Wellschlauches sein und ferner kann der kleinste Durchmesser der Außenwandung der Ringnut gleich oder größer als der Außendurchmesser desjenigen Wellschlauches sein, für welchen die Armatur vorgesehen ist. Dies ergibt die Möglichkeit, den Wellschlauch in seiner Montagelage an seinem Innendurchmesser auf den Innenstutzen auflaufen zu lassen und dabei eine dichtende Berührung zu erhalten, wähend der Wellschlauch an seiner Außenseite frei bleibt.

Es ist auch möglich, daß der größte Außendurchmesser des Innenstutzens im Bereich des Nutengrundes gleich oder kleiner als der Innendurchmesser desjenigen Wellschlauches und der kleinste Durchmesser der Außenwandung der Ringnut im Bereich des Nutengrundes gleich oder kleiner als der Außendurchmesser desjenigen Wellschlauches sind, für den die Armatur vorgesehen ist. In diesem Falle kann der Wellschlauch innen frei sein und läuft mit seinem Außendurchmesser an der erwähnten Außenwandung auf.

Sowohl der Innendurchmesser als auch der Außendurchmesser des Wellschlauches können auflaufen und in Berührkontakt kommen, wenn der größte Durchmesser der Innenwandung der Ringnut gleich oder größer als der Innendurchmesser desjenigen Wellschlauches und der kleinste Durchmesser der Außenwandung der Ringnut gleich oder keliner als der Außendurchmesser desjenigen Wellschlauches sind, für den die Armatur vorgesehen ist. Dies ergibt dann auch die beste Abdichtung.
Bei den vorerwähnten Möglichkeiten kann je nach axialer Druckkraft beim Montieren und je nach dem, in welches Wellental der Haltevorsprung in Gebrauchsstellung zum Einrasten gebracht wird, der Wellschlauch möglichst fest und dicht oder aber weniger fest und dafür drehbar montiert werden, was in manchen Fällen von erheblichem Vorteil ist. Auch ist es möglich, den Wellschlauch zunächst weniger fest einzuführen und drehbar zu lassen und ihn erst bei einer endgültigen Montage so fest einzuschieben, daß durch überspringen einer oder mehrerer Wellen der Wellschlauch fester und damit dichter eingedrückt wird.

Es ist aber auch möglich, die Armatur so zu gestalten, daß der Wellschlauch in jedem Falle drehbar ist, indem der größte Durchmesser der Innenwandung der Ringnut gleich oder kleiner und der kleinste Durchmesser der Außenwandung gleich oder größer als der jeweilige Durchmesser desjenigen Wellschlaubes sind, für den die Armatur vorgesehen ist.

Dabei ist bei all diesen Möglichkeiten vorteilhaft, daß der Haltevorsprung in Umfangsrichtung läuft und somit die zeitweilige oder dauernde Drehbarkeit des Wellschlauches innerhalb der Hülse nicht behindert.

Insgesamt ergibt sich eine Anschlußarmatur für umfangsgerippte Schläuche oder Rohre, die schon mit einer relativ kurzen Haltehülse eine feste und gute Kupplung ermöglicht, so daß sie auch unter beengten Platzverhältnissen Anwendung finden kann und beispielsweise auch für winkelförmige Schlauch- oder Rohranschlüsse, Verteilerdosen und dergleichen besonders gut geeignet ist.

Nachstehend ist die Erfindung mit ihren ihr als wesentlich zugehörenden Einzelheiten anhand der Zeichnung in mehreren Ausführungsbeispielen noch näher beschrieben.

Es zeigt in zum Teil schematisierter Darstellung:
- Fig. 1: einen axialen Längsschnitt,
- Fig. 2: eine Ansicht mit Draufsicht auf die Zunge und
- Fig. 3: einen Querschnitt gemäß der Linie A-B in Fig. 1 einer erfindungsgemäßen Anschlußarmatur mit einer Ausführungsform, bei welcher einzigen etwa in Umfangsrichtung orientierten Zunge, die durch schräg zu Querschnittsebenen der Hülse liegende Schlitze zusätzlich eine auch in axialer Richtung orientierte Bogenform hat,
- Fig. 4 bis 7: sechs verschiedene Querschnittsformen des rippenartigen Vorsprunges,
- Fig. 8: eine Ansicht einer Ausführungsform, bei welcher die in Umfangsrichtung und axialer Richtung bogenförmige Zunge über einen erheblichen Umfangsbereich der Hülse reicht,
- Fig. 9: einen Längsschnitt und
- Fig. 10: einen Querschnitt gemäß der Linie A-A in Fig. 9 einer Anschlußarmatur gemäß Fig. 8, wobei der an der bogenförmigen Zunge in Umfangsrichtung verlaufende Haltevorsprung in einem mittleren Bereich unterbrochen ist,
- Fig. 11: einen Längsschnitt und
- Fig. 12: einen Querschnitt gemäß der Linie B-B in Fig. 11 zu einer Anschlußarmatur gemäß Fig. 8, wobei an der Zunge in axialer Richtung zwei Haltevorsprünge hintereinanderliegen, deren einer eine Lücke aufweist und deren anderer bezüglich seiner Länge dieser Lücke entspricht und in Einsteckrichtung genau vor dieser Lücke angeordnet ist,
- Fig. 13: einen Längsschnitt und
- Fig. 14: einen Querschnitt gemäß der Linie C-C in Fig. 13 für eine Anschlußarmatur gemäß Fig. 8, bei welcher in axialer Richtung zwei rippenförmige Vorsprünge hintereinander angeordnet sind, wobei der in Einführrichtung zuerst kommende Haltevorsprung eine mittlere Lücke hat und der in Einführrichtung dahinter befindliche Haltevorsprung diese Lücke beidseits überdeckt,
- Fig. 15: einen Längsschnitt,
- Fig. 16: einen Querschnitt gemäß der Linie A-A in Fig. 15 und
- Fig. 17: eine Ansicht einer Anschlußarmatur, bei welcher die etwa in Umfangsrichtung verlaufende Federzunge auf ihrer dem Einsteckende der Hülse zugewandten Seite durch einen schräg zu einer Querschnittsebene verlaufenden Schlitz begrenzt und somit an dieser Seite auch in axialer Richtung bogenförmig gestaltet ist, während der dem Einsteckende fernere Begrenzungsschlitz auf einer Durchmesserebene liegt und zu einer geradlinigen Begrenzung dieser Seite der Zunge führt,
- Fig. 18: einen Längsschnitt,
- Fig. 19: einen Querschnitt gemäß der Linie A-B in Fig. 18 und
- Fig. 20: eine Seitenansicht einer Anschlußarmatur, bei welcher der dem Einsteckende abgewandte Begrenzungsschlitz der in Umfangsrichtung orientierten Zunge in einer Durchmesserebene liegt, während der dem Einführende nähere Begrenzungsschlitz nahe dem Federbereich einen auf einer Querschnittsebene liegenden Abschnitt hat, während der dem freien Ende der Zunge nähere Bereich des Begrenzungsschlitzes schräg ist,
- Fig. 21: eine Ansicht,
- Fig. 22: einen Längsschnitt und
- Fig. 23: einen Querschnitt gemäß der Linie A-A in Fig. 22 bei einer Anschlußarmatur, die zwei durch jeweils schräge Schlitze begrenzte, etwa in Umfangsrichtung orientierte bogenförmige Zungen mit genau in Umfangsrichtung liegenden rippenförmigen Haltevorsprüngen aufweist, wobei die Federbereiche und somit auch die freien Enden der Zungen jeweils in Umfangsrichtung gegeneinander versetzt sind,
- Fig. 24: eine Ansicht einer Anschlußarmatur auf dem Bereich/zweier einander zugewandter freier Enden zweier Federzungen,
- Fig. 25: einen Längsschnitt,
- Fig. 26: einen Querschnitt gemäß der Linie A-A in Fig. 25 und
- Fig. 27: eine Ansicht dieser Anschlußarmatur gemäß den Figuren 24 bis 26 auf die beiden einander unmittelbar benachbarten Federbereiche der beiden voneinanderweg etwa in Umfangsrichtung gerichteten und orientierten Federzungen,
- Fig. 28: eine teilweise im Längsschnit gehaltene Seitenansicht eines Eckwinkelanschlusses mit einer mit Federzunge versehenen Hülse,
- Fig. 29: einen Querschnitt der Hülse im Bereich der Federzunge gemäß der Linie A-B in Fig. 28 und
- Fig. 30: eine Draufsicht des Hülsenbereiches des Eckwinkelanschlusses gemäß Fig. 28,
- Fig. 31: eine Ansicht einer Verteilerdose mit insgesamt vier hülsenartigen Abgängen, die jeweils eine etwa in Umfangsrichtung orientierte Federzunge mit nach innen gerichtetem Haltevorsprung hat, wobei die Federzungen in diesem Ausführungsbeispiel durch schräg zu Querschnittsebenen liegende Schlitze auch in axialer Richtung etwas bogenförmig sind,
- Fig. 32: einen Längsschnitt einer Anschlußarmatur mit montiertem Wellschlauch oder Wellrohr, wobei im Bereich des Anschlagendes Dichtringe vorgesehen sind,
- Fig.33 bis Fig. 36: Längsschnitte diurch den die Federzunge aufweisenden Hülsenbeeich mit innerem Anschlag mit nutenförmiger Einsenkung bzw. Ringnut, die an einer Wandseite einen Innenstutzen oder eine Stützhülse begrenzt.
- Fig. 37: eine Ansicht,
- Fig. 38: einen Querschnitt gemäß der Linie C-D in Fig.37,
- Fig. 39: einen halben Längsschnitt durch eine Armatur mit zwei sich fortsetzenden Hülsen zum Kuppeln zweier Wellrohre oder -schläuche, wobei eine Hülse eine Axialzunge und die andere zwei in Umfangsrichtung voneinander weg verlaufende Zungen aufweist, sowie
- Fig. 40 bis Fig. 42: Abwandlungen der in Fig. 33 bis 36 dargestellten Ringnut beziehungsweise des Innenstutzens.

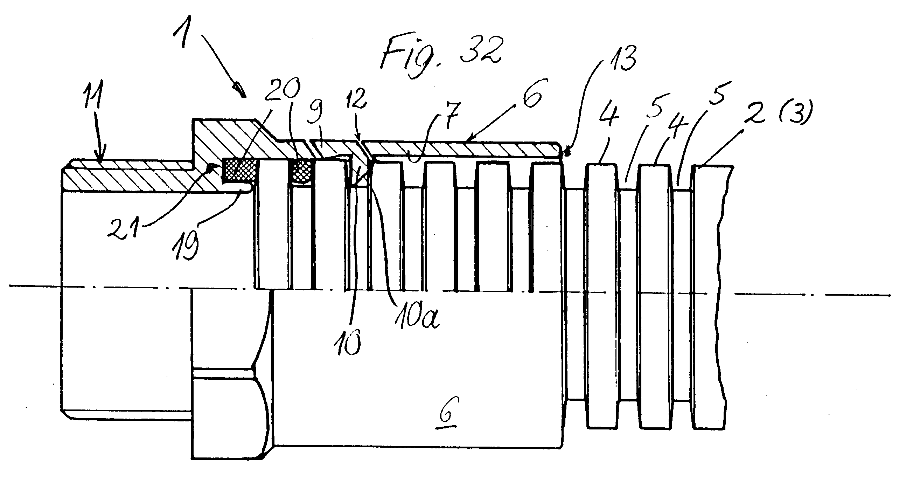

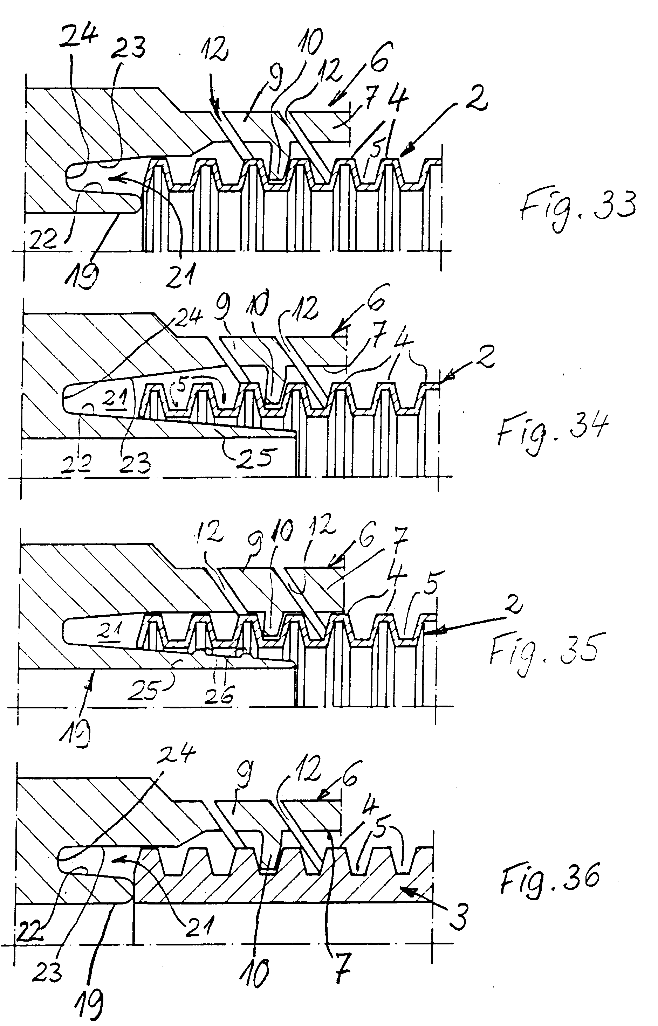

Eine im ganzen mit 1 bezeichnete Anschlußarmatur, im folgenden auch der Einfachheit halber Armatur 1 genannt, dient zur Befestigung, Kupplung oder Verlängerung von umfangsgerippten Schläuchen 2, (Fig. 32 bis 35) oder Rohren 3 (Fig. 36), welche jeweils quer zur Mittelachse angeordnete parallele Wellen 4 od.dgl.und dazwischen entsprechende Wellentäler 5 haben. Bei den folgenden verschiedenen Ausführungsbeispielen sind übereinstimmende Teile, selbst wenn ihre Formgebung verschieden ist, mit übereinstimmenden Bezugszahlen versehen.

Die Armatur 1 hat jeweils wenigstens eine das Ende des Wellschlauches 2 oder Rohres 3 in sich aufnehmende Hülse 6 und in der Wandung 7 dieser Hülse 6 ist eine gegen eine Rückstellkraft eines Federbereiches 8 auslenkbare Zunge 9 mit einem in das Hülseninnere gerichteten rippenartigen Vorsprung 10 zum Eingriff in ein Wellental 5 des Wellschlauches 2 oder Wellrohres 3 für dessen axiale Festlegung vorgesehen. Die in den Ausführungsbeispielen dargestellten Armaturen 1 haben außerdem einen Gewindebereich 11, womit die Armatur 1 an einem Gegengewinde angeschlossen werden kann. Es wäre aber auch möglich, stattdessen eine weitere Hülse 6 vorzusehen, damit zwei Wellschläuche 2 oder Wellrohre 3 koaxial zueinander gekuppelt werden können.

Bei allen Ausführungsbeispielen ist vorgesehen, daß die federnde Zunge 9 mit ihrem in das Innere der Hülse 6 gerichteten rippenförmigen Vorsprung 10 und die schlitzförmigen Begrenzungen 12 ihrer Längsseiten etwa in Umfangsrichtung der Hülse 6 verlaufen. Die Längsseiten der Zunge 9 und der Verlauf des rippenförmigen Vorsprunges 10 sind dabei etwa gleichgerichtet über einen Teil des Umfanges der Hülse 6 angeordnet. Somit kann die axiale Abmessung der federnden Zunge 9 relativ klein sein, so daß sie auch an relativ kurzen Hülsen 6 unter beengten Platzverhältnissen ausreichend Raum findet und dennoch eine genügende Länge haben kann, um eine zufriedenstellende Flexibilität zu haben.

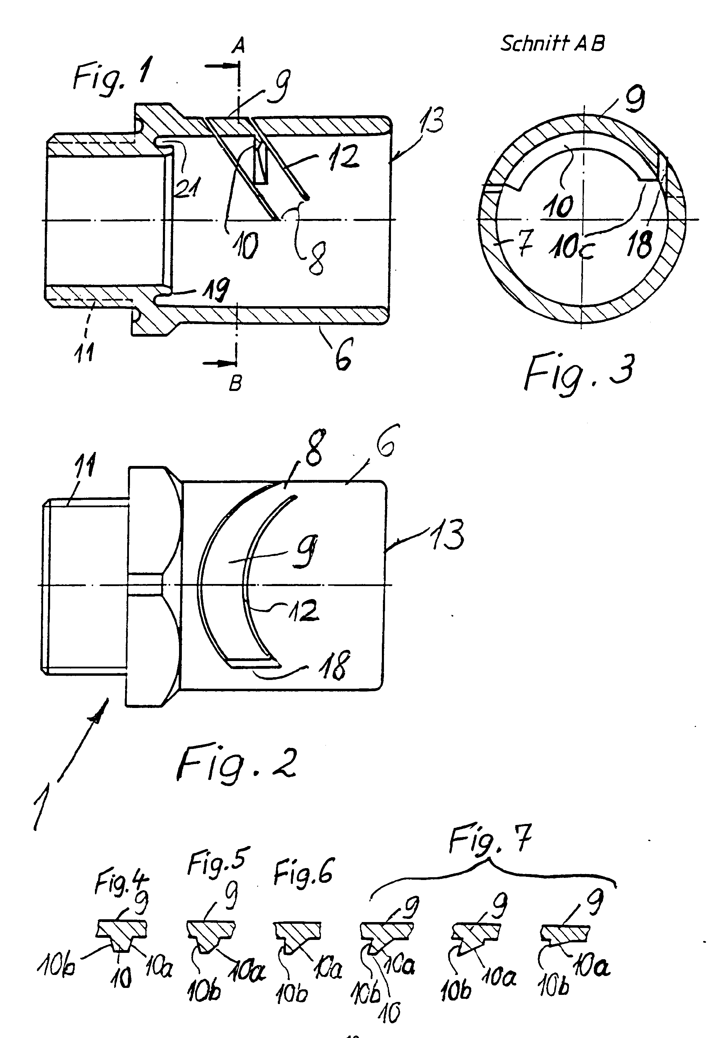

Im Ausführungsbeispiel nach den Figuren 1 bis 3 ist der rippenförmige Vorsprung 10 an dem in Umfangsrichtung orientierten Längsrand der Zunge 9 angeordnet, der dem Einführende 13 der Hülse 6 näher liegt.

Der gelenkartige Federbereich 8 kann in Umfangsrichtung so schmal oder gegebenenfalls auch bezüglich seines Querschnittes gegenüber der Zunge 9 oder der Hülsenwandung 7 derart vermindert sein, daß die Zunge auch in axialer Richtung verschwenk- oder auslenkbar ist, wobei eine solche Auslenkbewegung durch die geringe Breite des Schlitzes 12 begrenzt ist. Jedoch kann so die Zunge 9 praktisch über ihre gesamte Länge in eine Anschlagposition gelangen und entsprechend höhere Kräfte ohne weitere Belastung des Federbereiches 8 aufnehmen.

Damit beim Eindrücken des Schlauches 2 oder Rohres 3 die Zunge selbsttätig angehoben wird und dann der Vorsprung 10 in ein Wellental 5 einschnappen oder einrasten kann, ist gemäß Fig. 4 bis 7 vorgesehen, daß die zum Einführende 13 der Hülse 6 weisende Seitenfläche 10a des Vorsprunges 10 über wenigstens einen Teil seiner Höhe schräg von außen nach innen und dabei von dem Einsteckende 13 weg verläuft. Fig. 4 bis 7 verdeutlichen, daß dies dabei unterschiedlich stark ausgeprägt sein kann, je nachdem, ob diese selbsttätige Kupplungsbewegung oder eine größere Stabilität dieses Haltevorsprunges 10 im Vordergrund steht.

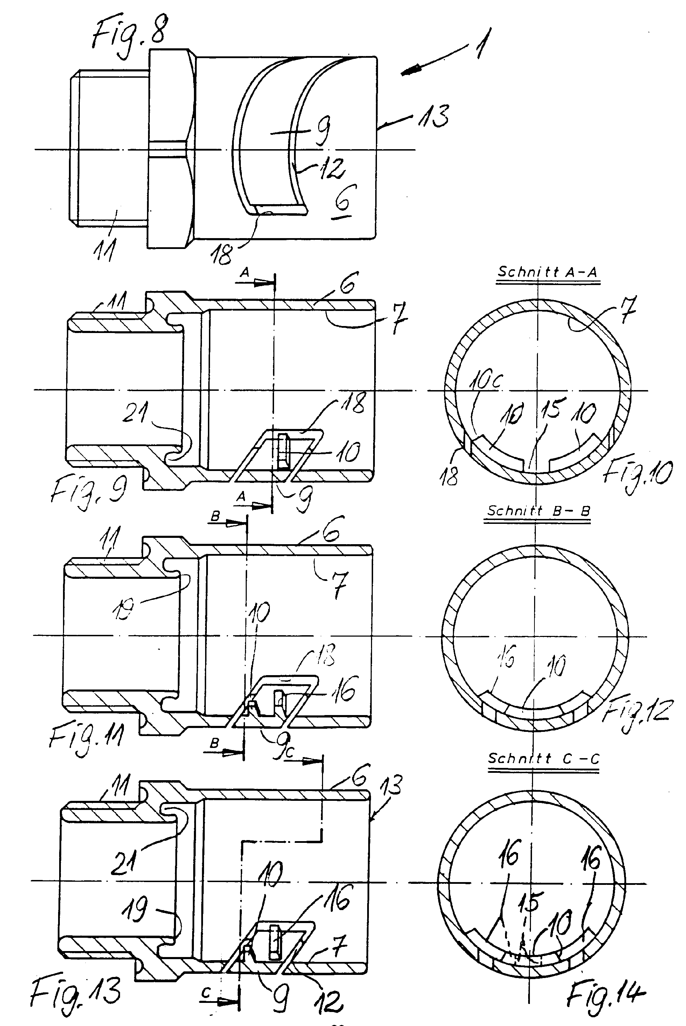

Dabei zeigen Fig. 4 bis 7 ferner, daß auch die der Einführrichtung oder dem Einsteckende 13 abgewandte Anschlagfläche 10b des Haltevorsprunges 10 unterschiedlich gestaltet sein kann und bis auf die am weitesten links in Fig. 4 erkennbare Ausführungsform steiler als die andere Seitenfläche 10a ist. Während sie bei der zweiten Ausführungsform (Fig. 5) mit der Hülsenwandung noch einen stumpfen Winkel einschließt, ist sie bei der dritten Ausführungsform (Fig. 6) rechtwinklig zur Innenwand 7 der Hülse 6 und in den nachfolgenden Ausführungsbeispielen (Fig.7) sogar in spitzem Winkel zu dieser Innenseite 7 der Hülse 6 angeordnet, so daß sich eine Hinterschneidung ergibt. Eine entsprechend feste Verbindung und Anlage ergibt sich, wenn ein Wellschlauch unter axialen Zug gerät, so daß sich unter Umständen sogar seine zunächst etwa trapezförmige Welle 4 an ihrer Berührseite zu dem Anschlagvorsprung 10 eindrückt und so dann dieser steilen oder gar hinterschnittenen Seitenfläche 10b einpassen kann. Es ergibt sich somit eine erhebliche Verbesserung der übertragbaren Haltekraft.

In mehreren Ausführungsbeispielen, beispielsweise in Fig. 16 oder 19 usw. erkennt man, daß der rippenartige Vorsprung 10 vom freien Ende der Zunge 9 zu dem Federbereich 8 hin in seiner Höhe abnimmt und/oder mit Abstand vor dem Federbereich 8 endet. Da der Federbereich 8 selbst gar nicht ausschwenkbar ist und somit der ihm nähere Bereich nur sehr kleine radiale Auswärtsbewegungen durchführen kann, während das freie Ende der Zunge 9 naturgemäß die größte relative Radialverstellung gegenüber der Außenseite der Hülsenwandung 7 durchführen kann, ergibt sich durch diese Maßnahme, daß bei einer Demontage die Zunge 9 nur relativ geringfügig angehoben werden muß, um die bis dahin von dem Vorsprung 10 erfasste und hintergriffene Welle 4 des Schlauches 2 oder Rohres 3 für ein Herausziehen aus der Hülse 6 freizugeben. Der Federbereich 8 der Zunge 9 kann bei axialer Belastung und Verstellung des Vorsprunges 10 bereichsweise aufwölbbar und demgemäß das freie Ende der Zunge 9 mit dem Vorsprung 10 axial verschwenkbar sein. Dies wurde schon in dem Zusammenhang erwähnt, daß dann der dem Einführende 13 nähere Längsschlitz 12 geschlossen wird und die Zunge sich praktisch über ihre gesamte in Umfangsrichtung verlaufende Längsseite abstützen kann.

Dies kann jedoch zu einer weiteren Verstärkung der Kupplungskraft unter axialer Belastung ausgenutzt werden, indem beispielweise gemäß dem Ausführungsbeispiel nach Fig. 1 bis 3 sowie weiteren vergleichbaren Ausführungsbeispielen die bei axialer Belastung und Verformung der Zunge 9 sich berührenden Ränder des zwischen Zunge 9 und Hülsenwand 7 befindlichen Schlitzes 12 von der Hülsenoberseite zum Hülseninneren schräg in der Richtung zurückspringen, in welche die axiale Verformung der Zunge erfolgt. Man erkennt dies ganz deutlich in Fig. 1 oder auch in den Figuren 9, 11, 13, 15 oder 18. Dabei sind beide Begrenzungen des Schlitzes 12 in gleicher Richtung schräg orientiert und verlaufen etwa parallel zueinander, so daß bei einem Schließen dieses Schlitzes 12 durch die axiale Verschwenkung der Zunge 9 unter axialer Zugbelastung eine flächige Berührung entsteht.

Ist diese axiale Belastung entsprechend hoch, wird die Zunge 9 noch weiter in axialer Richtung verformt, wobei sich daraus dann zwangsweise auch eine radiale Verstellung ergibt, die natürlich auch nach einem sehr kurzen Weg durch das Aufliegen am Wellschlauch oder Wellrohr ihr Ende findet. Der Haltevorsprung 10 erhält jedoch durch diese Maßnahmen bei axialer Belastung eine in das Innere der Hülse gerichtete Kraftbeaufschlagung, so daß einem ungewollten Lösen der Kupplung zwischen Haltevorsprung 10 und Wellental 5 selbsttätig entgegengewirkt wird.

Während bei allen dargestellten Ausführungsbeispielen der Haltevorsprung 10 in seiner Ausgangsstellung genau in Umangsrichtung verläuft, weil die erwähnte geringfügige axiale und radiale Verschwenkung der Zunge bei Zugbelastung innerhalb des Spieles liegt, das zwischen dem Haltevorsprung 10 und dem Wellental 5 existiert, könnte der Haltevorsprung auch entgegen der axialen Verschwenkung der Zunge 9 schräg zum Hülsenumfang verlaufen, so daß er unter Höchstbelastung dann gerade genau in Umfangsrichtung verläuft und so eine bestmögliche Anlage an einer Seitenfläche einer Welle 4 findet.

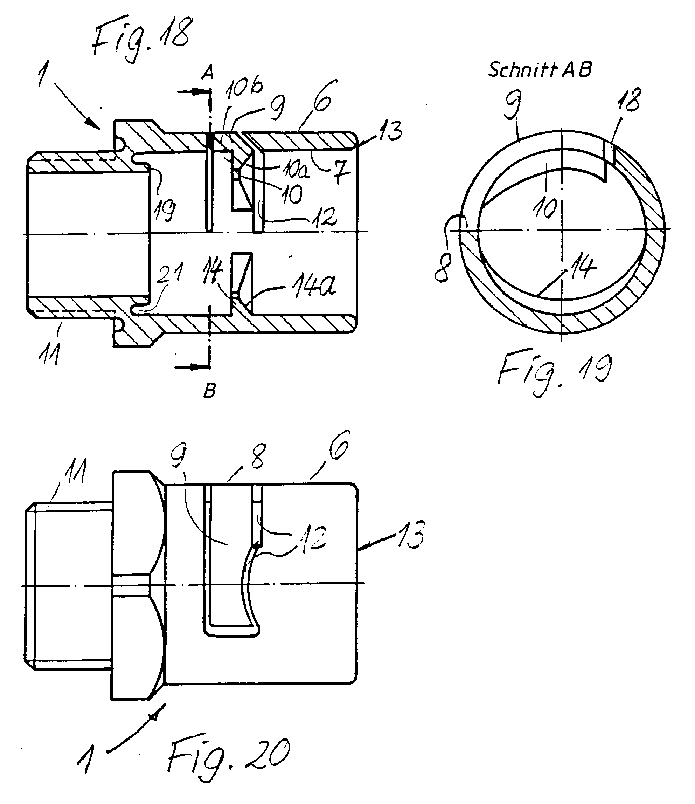

In den Ausführungsbeispielen nach Fig. 15 bis 17 und 18 bis 20 ist nur derjenige Begrenzungsschlitz 12 zwischen Zunge 9 und Hülse 6, der dem Einsteckende 13 der Hülse 6 näherliegt, schräg gegenüber einer Querschnittsebene geneigt, wobei das Ausführungsbeispiel nach den Figuren 15 bis 17 dies für die gesamte Längsseite der Zunge 9 vorsieht, während bei dem Ausführungsbeispiel nach Fig. 18 bis 20 diese Schrägung des Begrenzungsschlitzes 12 nur für den dem Federbereich 8 ferneren Teil der Zunge 9 nahe deren freiem Ende zutrifft. Dabei ist dieser Schlitz 12 jeweils schmaler als es der Auslenkbarkeit der Zunge in axialer Richtung entspricht, damit sie bei Berührung der beiden Begrenzungen dieses schrägen Schlitzes die schon erwähnte zusätzliche Radialbewegung in das Hülseninnere durchführen kann.

Bei den übrigen Ausführungsbeispielen erkennt man, daß beide in Umfangsrichtung verlaufenden Begrenzungsschlitze 12 der Zunge 9 schräg und dabei insbesondere auch parallel zueinander angeordnet sind und die Zunge dadurch insgesamt auch axial bogenförmig wird, während natürlich der rippenförmige Vorsprung 10 seine Umfangsorientierung beibehält.

Darüber hinaus trägt der dem Einsteckende 13 abgewandte schräge Schlitz dazu bei, die radiale Auslenkung der Zunge 9 nach außen zu fördern, wenn der Schlauch 2 oder das Rohr 3 eingeführt werden, weil sich daraus eine gewisse axiale Belastung der Zunge 9 von dem Einsteckende 13 weg ergibt, so daß auch dann die Schrägflächen zu einer nach außen gerichteten Kraftkomponente beitragen können. Natürlich können die in radialer Richtung verlaufenden Schlitze auch nicht parallel zueinander ausgeführt sein, wodurch sich die Anbindung der Zunge an die Hülse verschmälert oder verbreitert und damit die Auslenkbarkeit der Zunge verstärkt oder abschwächt.
In Figur 18 und 19 erkennt man eine weitere Verstärkung der Kupplung zwischen Hülse und Schlauch oder Rohr, indem an der Innenseite der Hülsenwand 7 etwa gegenüber der über einen Teilbereich des Umfanges verlaufenden Zunge 9 eine feste Halterippe 14 mit im Ausführungsbeispiel zu ihren beiden Enden hin sicher vermindernder Höhe und insbesondere schräger Seitenfläche 14a vorgesehen ist. Vor allem ein flexibler Wellschlauch 2 kann gut über eine solche angeschrägte feste Rippe 14 geschoben werden insbesondere wenn die gegenüberliegende Zunge 9 gut ausfedert.

Eine andere oder zusätzliche Maßnahme zur Verbesserung der Haltekraft selbst für den Fall, daß nur eine einzige Zunge 9 vorgesehen ist, erkennt man in den Figuren 11 bis 14.

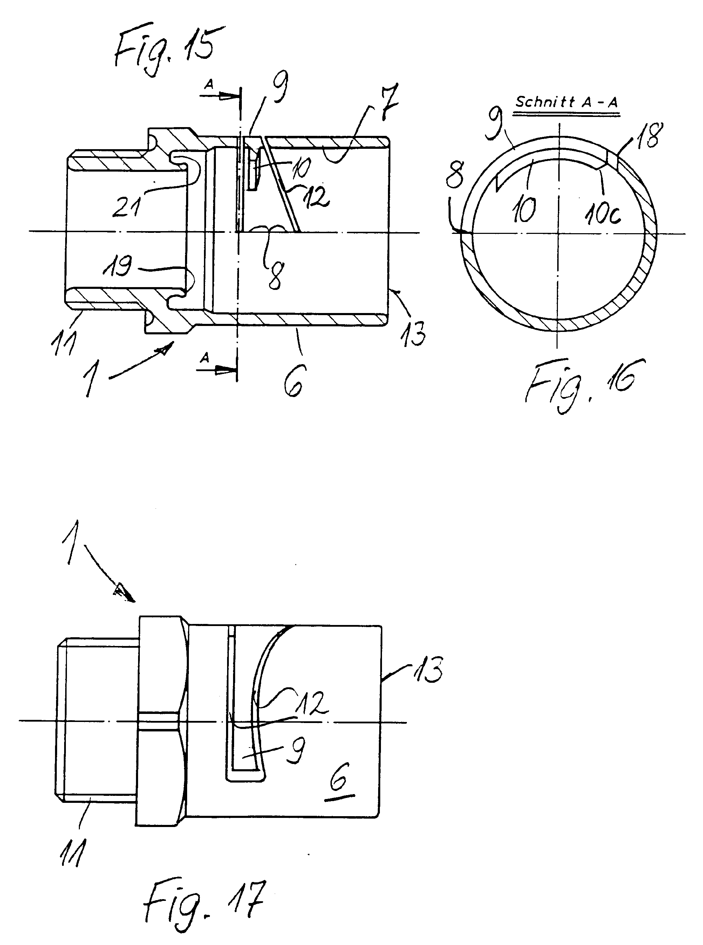

Während Fig. 9 und 10 eine Lösung zeigt, bei welcher der Haltevorsprung 10 eine Lücke 15 hat, die in scheinbar paradoxer Weise auch schon die Haltekraft dadurch verstärken kann, daß das Wellrohr bei einer Zugbelastung versucht, in dieser Lücke 15 radial nach außen auszuweichen, so daß sich die der Lücke benachbarten Bereiche des Vorsprunges 10 entsprechend gut in dem Wellental 5 halten können, ist bei den Ausführungsformen gemäß den Figuren 11 bis 14 vorgesehen, daß an der Zunge 9 in axialer Richtung hintereinander jeweils zwei Haltevorsprünge 10 und 16 vorgesehen sind, deren einer, im Ausführungsbeispiel gemäß Fig. 13 und 14 der dem Einsteckende 13 näherliegende Haltevorsprung 16, in seinem mittleren Bereich ebenfalls eine Lücke 15 hat, die von dem in axialer Richtung daneben befindlichen Haltevorsprung überbrückt oder überlappt ist. Die schon erwähnte Tendenz eines Wellschlauches, sich im Bereich einer solchen Lücke 15 radial nach außen zu drücken, wenn er axial belastet wird, führt dann zu einer entsprechend sicheren Verrastung zwischen diesem die Lücke 15 überbrückenden weiteren Haltevorsprung.

Da die Zunge 9 in Umfangsrichtung der Hülse 6 orientiert ist, kann sie und somit auch ihr Haltevorsprung 10 bzw. 16 eine große Umfangslänge haben, wodurch sich eine entsprechend feste Verbindung mit dem Wellschlauch 2 oder Wellrohr 3 ergibt, wenn auch nur eine einzige Zunge vorgesehen ist. Es ist also ein Vorteil dieser Gestaltung, daß eine einzige Zunge schon genügt, um entsprechend große Kupplungskräfte zu übertragen. Dabei kann die Umfangslänge des Vorsprunges 10 wenigstens etwa ein Fünftel, ein Viertel oder ein Drittel des Innendurchmessers der Hülse 6 betragen. Es ist sogar bei entsprechend großer Länge der Zunge 9 möglich, daß die Umfangslänge des rippenförmigen Vorsprunges 10 oder 16 ungefähr gleich dem Durchmesser der Hülse 6 ist oder etwa dem halben Umfang der Hülse 6 entspricht oder sogar über mehr als den halben Umfang der Haltehülse 6 reicht.

Fig. 3 oder 8 oder 16 zeigen z.B. Lösungen, bei denen die Länge der Zunge erheblich mehr als ein Viertel des Umfanges beträgt und der rippenförmige Vorsprung 10, der mit Abstand zum Federbereich 8 endet, etwa ein Viertel der Umfangslänge einnimmt. Bei Fig. 19 erkennt man eine noch größere Umfangslänge, wobei die Höhe des Vorsprunges 10 zum Federende 8 hin abnimmt.

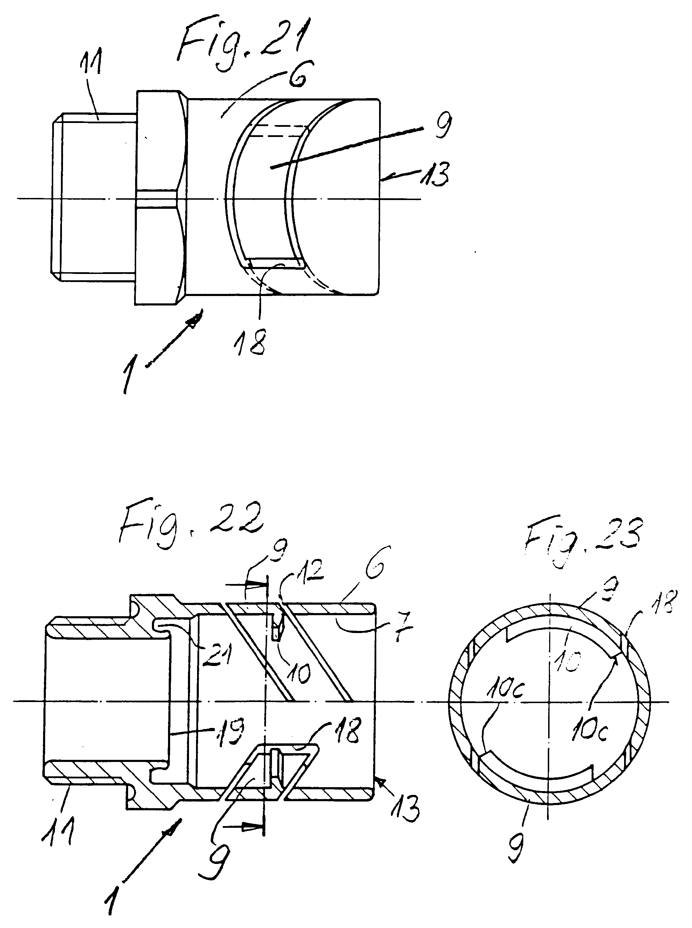

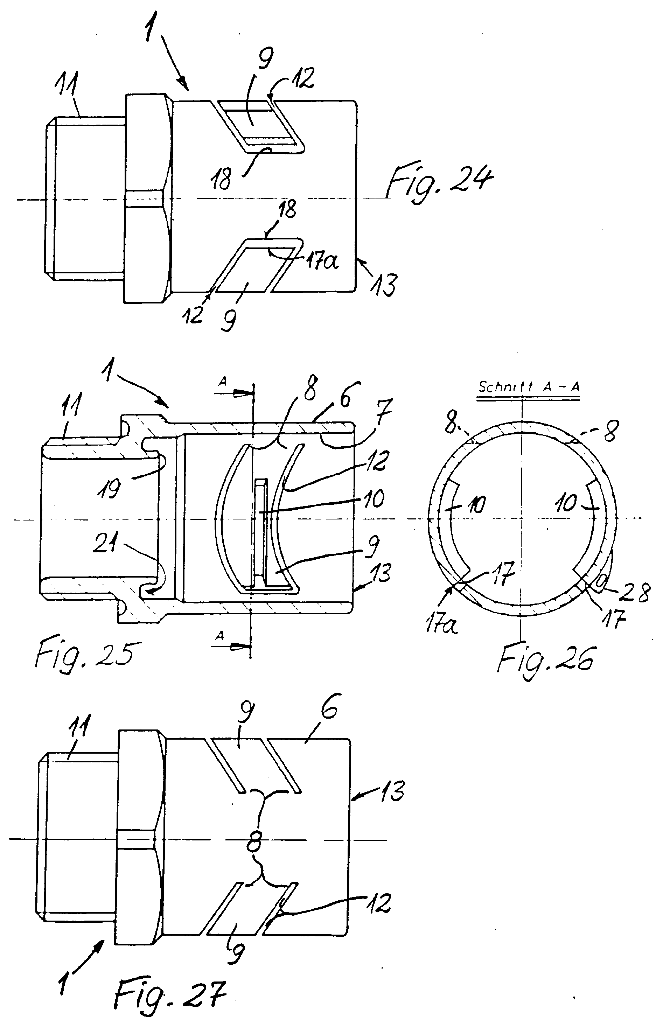

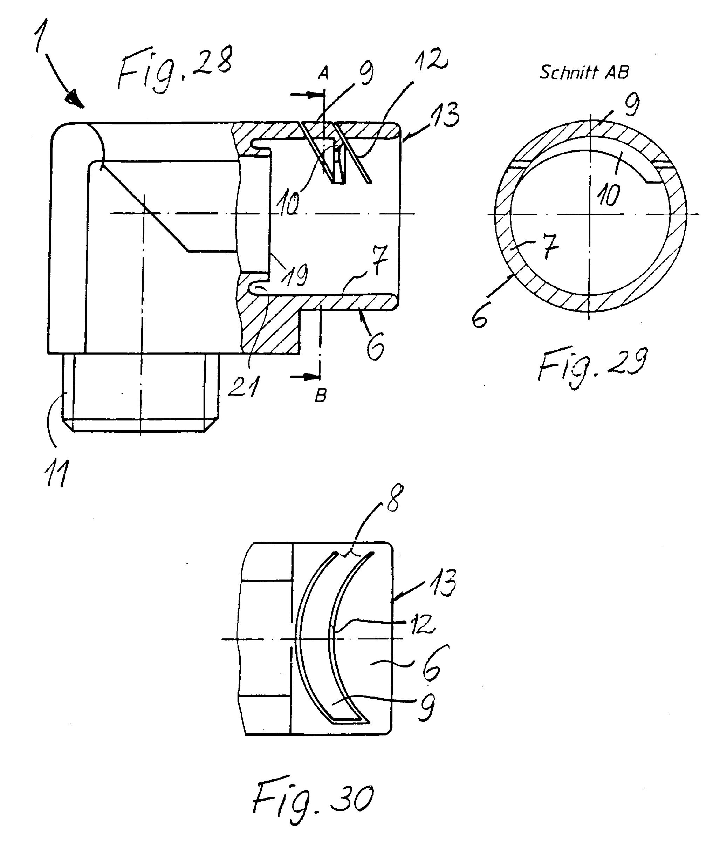

In den Figuren 21 bis 27 ist jedoch dargestellt, daß wenigstens zwei Zungen an der Hülse angeordnet sein können, wobei diese entweder gemäß Fig. 21 bis 23 gleichgerichtet sein können, also ihre Federenden 8 einander etwa gegenüberliegen, oder vorzugsweise gegenläufig an der Hülse sind, so daß ihre Federbereiche 8 gemäß Fig. 27 und ihre freien Enden gemäß Fig. 24 einander jeweils benachbart sind. Letzteres hat den Vorteil, daß die beiden federnden Enden mit zwei Fingern einer einzigen Hand gleichzeitig erfaßt und aufgebogen werden können, wenn eine Demontage erfolgen soll. Die zweite Hand des Monteurs ist dann dazu frei, nach dem Aufbiegen der Federzungen 9 den Schlauch 2 oder das Rohr 3 aus der Hülse 6 herauszuziehen.

Dies kann sowohl bei der Lösung mit zwei Zungen 9 als auch bei der Lösung mit nur einer Zunge 9 dadurch begünstigt sein, daß an der Haltezunge 9 vorzugsweise nahe dem freien Ende eine Anhebehilfe 17 vorgesehen ist. Diese Anhebehilfe 17 kann schon einfach eine von außen nach innen stirnseitig radial verlaufende Fläche 17 am freien Ende der Zunge sein, die sich gegebenenfalls als Vorsprung über die Außenkontur der Zunge und der Hülse nach außen fortsetzen könnte. Ist jedoch zwischen dem freien Ende der Zunge 9 und dem Hülsenmantel ein genügend breiter Schlitz oder Abstand, kann aufgrund der Umfangskrümmung der Hülse und der Zunge schon die am Übergang von der Oberfläche zur Innenseite befindliche Kante 17a des freien Endes der Zunge 9 als Aushebehilfe genügen. Dies hat den Vorteil, daß im Bereich der federnden Zunge die Außenkontur der gesamten Armatur glatt und vorsprungfrei bleibt. Falls dies keine Rolle spielt und genügend Platz vorhanden ist, könnte jedoch im Interesse einer leichteren Demontierbarkeit als Anhebehilfe an oder nahe dem freien Ende der Zunge 9 ein nach außen vorstehende Vorsprung anstelle der stirnseitigen Fläche 17 oder zusätzlich zu dieser Fläche 17 vorgesehen sein.

Sollte eine Demontage nur mit Hilfe eines Werkzeuges vorgesehen werden, so wird auf jede Anhebehilfe verzichtet und die Zunge wird an ihrem freien Ende stirnseitig mit einer von außen nach innen unter einem spitzen Winkel zur Hülsen-Innenwandung verlaufenden Fläche versehen, wodurch diese Kante 17a nicht mehr als Anhebehilfe vorhanden ist. Beispielsweise in den Figuren 3 oder 23 erkennt man, daß das am freien Ende der Zunge 9 befindliche Ende 10c des oder der Vorsprünge 10 bzw. 16 insbesondere unter spitzem Winkel zur Hülseninnenseite gegen das Federende bzw. den Federbereich 8 der Zunge 9 hin geneigt sein kann. Dies ist deshalb vorteilhaft, weil dieses freie Ende der Zunge beim Ausschwenken um den Federbereich 8 einen Kreisbogen durchführt und ein einfach in Fortsetzung des Schlitzes verlaufendes Ende des Vorsprunges 10 mit der gegenüberliegenden Begrenzung 18 der Hülsenwandung 7 kollidieren könnte.

In praktisch allen Ausführungsbeispielen erkennt man, daß im Inneren der Hülse 6 ein Anschlag 19 für die Stirnseite des Wellschlauches 2 oder Rohres 3 und evtl. außerdem eine Dichtung 20 zwischen Hülse 6 und Wellschlauch 2 oder Rohr 3 vorgesehen sein kann, die in diesem stirnseitigen Bereich untergebracht sein kann. Diese Dichtung 20 muß aber nicht unbedingt als Dichtring ausgebildet sein, sondern eine gewisse Abdichtung kann sich auch durch eine besondere Formgebung des Anschlages im Zusmmenwirken mit der Stirnseite oder dem Einführende des Wellschlauches 2 oder auch des Wellrohres 3 ergeben.

Zunächst sei jedoch erwähnt, daß der Abstand der federnden Zunge 9 und ihrer Schlitzbegrenzungen von dem Stirnanschlag 19 für den Wellschlauch 2 oder das Wellrohr 3 und eine dort gegebenenfalls vorgesehene Dichtung 20 größer als eine Welle 4 und ein Wellental 5 sein können, damit genügend Platz außerhalb des Bereiches der Federzunge für einen umlaufenden Dichtring gegeben ist und dessen Wirkung nicht teilweise durch die Schlitzbegrenzung der Federzunge zunichte gemacht wird. In Fig. 32 erkennt man, daß neben einer stirnseitigen Dichtung 20 auch ein Dichtring 20 in dem stirnseitennahen letzten Wellental des Wellschlauches 2 im Inneren der Hülse 6 und außerhalb des Schlitzbereiches der Federzunge 9 Platz hat.

Sowohl bei dieser Lösung nach Fig. 32 als auch in den zuvor erläuterten und dargestellten Ausführungsbeispielen, aber auch bei den noch näher zu beschreibenden Ausführungsbeispielen gemäß den Figuren 33 bis 36 weist der Innenanschlag 19 der Hülse 6 eine ringnutförmige Einsenkung 21 auf, in welcher wie bei der Lösung nach Fig. 32 ein Dichtring 20 untergebracht sein könnte, aber nicht sein muß.

Wenigstens eine der Nutenwände 22 oder 23, bei den Figuren 33 bis 35 die radial äußere Nutenwand 23, bei den Figuren 33 bis 36 auch die radial innere Nutenwand 22, verlaufen dabei in Einsteckrichtung des Wellschlauches 2 im Sinne einer Verengung der Nut 21 zu ihrem Boden 24 hin schräg, d.h. der Nutenquerschnitt verjüngt sich zum inneren bzw. zum Boden 24 der Nut 21 hin konisch. Dies bedeutet, daß beim Einschieben des Endes des Wellschlauches 2 dessen letzte Welle 4 und gegebenenfalls auch noch die vorletzte Welle verformt und zwischen diesen immer enger werdenden Wandungen 22 und 23 eingeklemmt wird, so daß allein daraus schon eine Dichtwirkung erzielt werden kann, die mindestens gegen Spritzwasser genügend dicht ist.

Während Fig. 33 eine etwa dichtende Berührung zwischen der Außenseite der Welle 4 mit der äußeren Nutenwandung 23 zeigt, ist bei Fig. 34 die Innenseite des Wellrohres mit der gegenüberliegenden inneren Nutenwandung 22 in einem entsprechenden Kontakt, wenn jeweils der Haltevorsprung 10 der Zunge 9 in eine Gebrauchsstellung in einem Wellental 5 eingeschnappt ist, wobei bei Figur 33 bei einer weiteren axialen Verschiebung des Schlauches in Richtung Anschlag auch an der Innenseite des Wellrohres eine zunehmende Abdichtung stattfindet. Fig. 35 zeigt nun eine Lösung, bei welcher sowohl die Innenseite als auch die Außenseite des Wellrohres mit Seitenwänden 22 und 23 der Nut 21 in Berühr- oder Druckkontakt kommt, wenn die Federzunge mit ihrem Haltevorsprung 10 in Gebrauchsstellung ist. Somit ergibt dies eine noch bessere Abdichtung.

Dabei erkennt man vor allem bei den Ausführungsformen nach Fig. 34 und 35 , daß die innere Nutenwand 22 als Hülse 25 zum reibschlüssigen oder formschlüssigen Eingriff in das Ende des Wellrohres 3 oder insbesondere Wellschlauches 2 verlängert und vorzugsweise konisch sein kann. Diese Verlängerung kann dabei in oder - gemäß Fig. 34 und 35 - über den Bereich des oder der die Zung 9 begrenzenden Schlitze 12 ragen, so daß eventuell eindringendes Wasser durch den Schlitz 12 ablaufen kann.
An dieser Hülse 25 kann auf der dem Schlauch 2 oder Rohr auf der Innenseite zugewandten Seite, also an der Außenseite dieser Hülse 25, wenigstens ein im Ausführungsbeispiel ringförmig umlaufender Vorsprung 26 vorgesehen sein, der zweckmäßigerweise im Bereich einer Welle 4 zu liegen kommen kann und etwas in diese hineinragt. An einem solchen Vorsprung 26 kann sich aus dem Rohrinneren kommende Flüssigkeit etwas aufstauen und wieder abtropfen und dabei bildet dieser Vorsprung 26 mit der Welle 4 zusammen eine Art Labyrinthdichtung. Es ergeben sich somit Möglichkeiten, im Zusammenwirken mit der federnden Zunge 9 und ihrem Haltevorsprung 10 eine Abdichtung des Endes des Wellschlauches zu erzielen, ohne daß Dichtringe 20 vorgesehen sind. Diese können aber natürlich zusätzlich ebenfalls noch vorhanden sein, um den Grad der Dichtigkeit zu steigern.

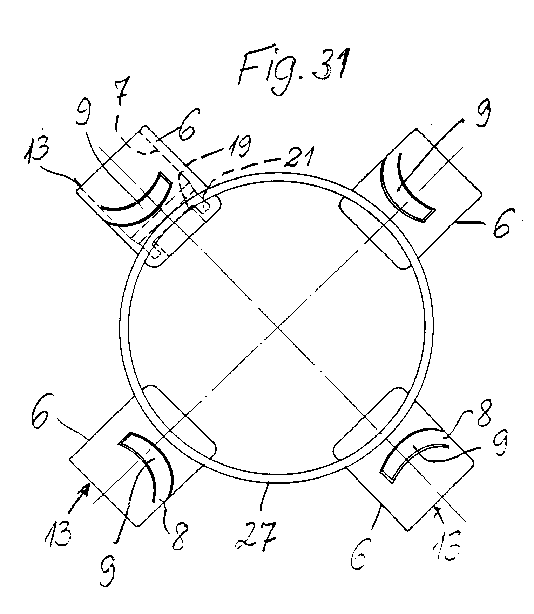

Neben der normalen Anschlußarmatur 1 mit einer axial geradlinig sich fortsetztenden Durchgangsöffnung kann die Erfindung auch bei winkelförmigen Anschlußarmaturen gemäß Fig. 28 bis 30 zur Anwendung kommen, wo der Gewindebereich 11 gegenüber der Hülse 6 in einem Winkel steht. Dabei ist die Hülse 6 extrem kurz, erlaubt aber dennoch die Unterbringung der Haltezunge 9.
Eine weitere Anwendungsmöglichkeit zeigt Fig. 31 bei einer Anschlußdose 27, von welcher insgesamt vier Hülsen 6 mit entsprechenden Zungen 9 seitlich abstehen und abgehen.

Die Anschlußarmatur 1 für umfangsgerippte Schläuche 2 oder Rohre 3, insbesondere für flexible Wellschläuche 2, die quer zur Schlauchachse angeordnete parallele Wellen 4 haben, hat eine das Ende des Wellschlauches 2 oder -rohres 3 in sich aufnehmende Hülse 6 und in der Wandung 7 dieser Hülse 6 eine gegen eine Rückstellkraft eines Federbereiches 8 radial nach außen auslenkbare Haltezunge 9 mit einem in das Hülseninnere gerichteten Vorsprung 10 der sich zum Eingriff in ein Wellental 5 des Wellschlauches 2 oder Wellrohres 3 für dessen axiale Festlegung an der Unterseite der Zunge 9 befindet. Um eine gute Selbstrastung bei der Montage zu erhalten und in axialer Richtung wenig Platz für diese Haltezunge 9 und ihren Vorsprung 10 zu benötigen und dabei die Haltekraft und Sperrwirkung evtl. sogar noch steigern zu können, verlaufen die federnde Zunge 9 mit ihrem in das Hülseninnere gerichtete rippenförmigen Vorsprung 10 und die schlitzförmigen Begrenzungen 12 ihrer Längseiten etwa in Umfangsrichtung der Hülse 6. Die Schwenkachse und der Federbereich der Zunge 9 sind somit etwa in axialer Richtung der Hülse 6 orientiert.

Entgegen der Darstellung der Fig. 1 könnte - z.B. bei sehr kurzer Hülse 6 - die axiale Breite der Zunge noch erheblich geringer sein und beispielsweise etwa gleich der des Vorsprunges 10 sein. Außerdem sei noch erwähnt, daß der Vorsprung 10 oder 16 auch durch mehrere Lücken in Einzelvorsprünge oder noppenartige Vorsprünge aufgeteilt sein könnte.

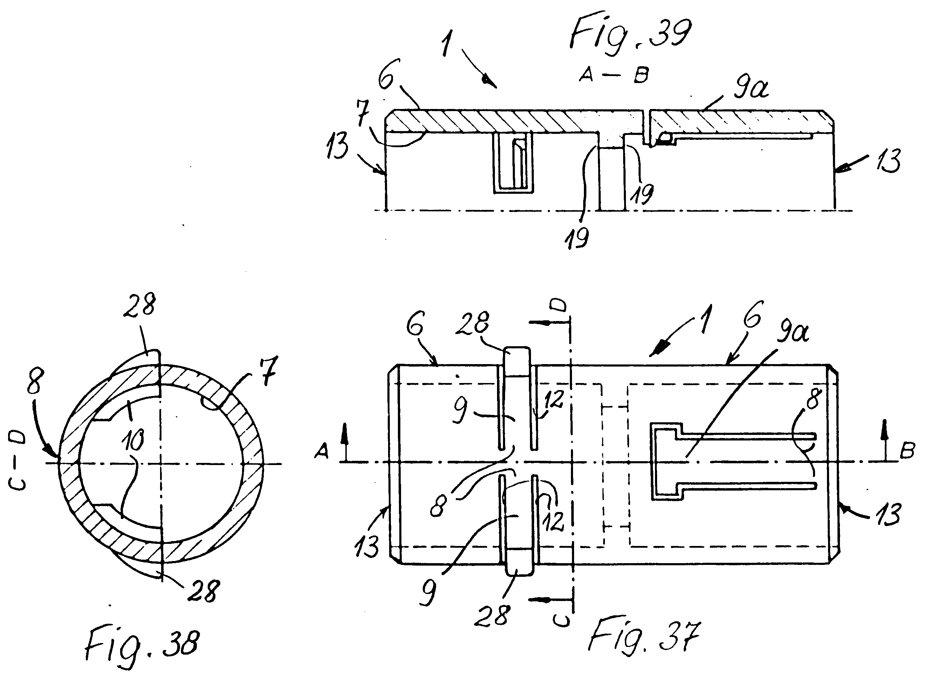

Fig. 37 bis 39 zeigt ein Auführungsbeispiel, bei welchem zwei Hülsen 6 sich - miteinander fluchtend - fortsetzen und somit zur Kupplung zweier Wellrohre oder Wellschläuche geeignet sind. Dabei hat die eine Hülse eine in axialer Richtung verlaufende relativ lange, an ihrem freien Ende verbreiterte Zunge 9a, während an der zweiten Hülse 6 dargestellt ist, daß zwei etwa von der gleichen Stelle mit ihren Federbereichen 8 ausgehende, in Umfangsrichtung orientierte Zungen 9 mit an ihren freien Enden vorstehenden Vorsprüngen 28 als An- oder Aushebehilfe versehen sein können. In Fig. 38 erkennt man deutlich, daß diese Vorsprünge 28 sehr leicht mit einer Hand gleichzeitig erfaßt und beide nach oben verschwenkt werden können, wodurch die ihnen entgegengesetzt nach innen ragenden Vorsprünge 10 aus dem Wellental 5 eines Schlauches 2 oder Rohres 3 ausgehoben werden. Dabei sieht man wiederum, daß diese Vorsprünge 10 mit Abstand vor dem Federbereich 8 enden und gegen diesen Bereich hin schräg abfallen, damit eine nicht zu große Aushebebewegung erforderlich ist.

Selbstverständlich könnten auch beide Hülsen 6 dieses Ausführungsbeispieles in Umfangsrichtung verlaufende Haltezungen 9 haben, jedoch zeigt dieses Beispiel, daß dabei auch beliebige, voneinander abweichende Kupplungsmöglichkeiten - je nach Erfordernissen - zur Anwendung kommen können. Beispielsweise könnte eine relativ lange Hülse 6 mit einer odr mehreren in axialer Richtung verlaufenden Zungen 9a versehen sein, während eine möglicherweise nur kurze Hülse 6 in Umfangsrichtung verlaufende Zungen hat. Im Ausführungsbeispiel sind allerdings beide Hülsen gleich lang.

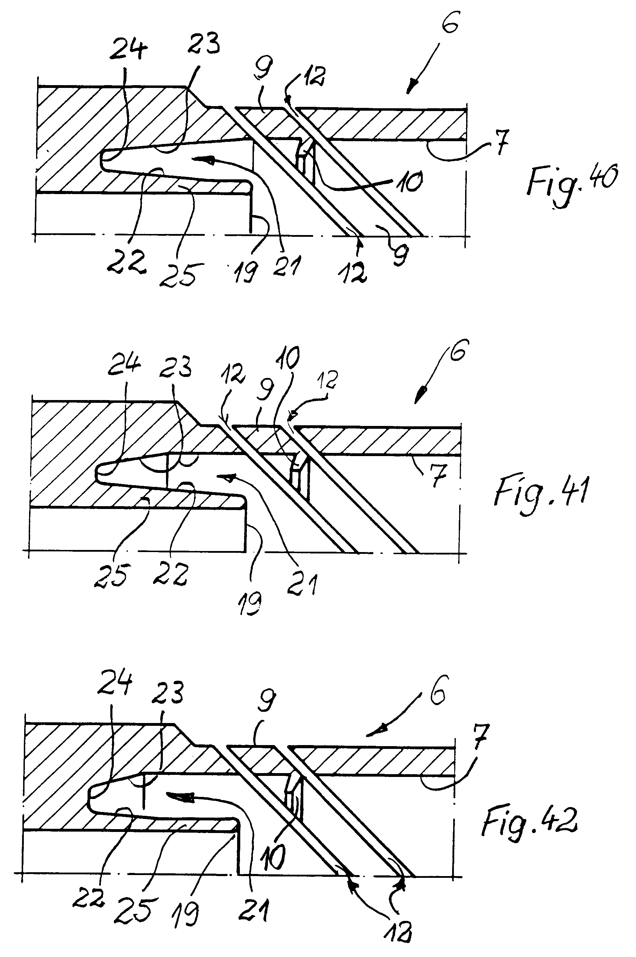

In den Figuren 40 bis 42 ist verdeutlicht, daß die innere Nutenwand 22 und/oder die äußere Nutenwand 23 der Ringnut 21 auch nur bereichsweise schräg verlaufen können. Fig. 40 ist dabei eine Lösung, bei der zwar die gesamte Außenwand 23, aber nur ein Teil der Innenwandung 22 schräg verlaufen, während der der Stirnseite des Innenstutzens 25 nahe Bereich etwa zylinderförmig ist.

Umgekehrt ist beim Ausführungsbeispiel nach Fig. 41 zwar die gesamte Innenwandung 22 der Ringnut 21 schräg, aber die Außenwandung 23 nur über einen Teil der Tiefe der Ringnut 21 und zwar der dem Nutengrund 24 nahe Bereich.

Fig. 42 zeigt schließlich eine Lösung, bei der beide Nutenwandungen 22 und 23 nahe dem Boden oder Nutengrund 24 schräg, im übrigen aber etwa zylinderförmig und dabei parallel zueinander verlaufen. Dabei begrenzt die innere Nutenwand 22 jeweils diesen Innenstutzen 25, der vorstehend auch als Stützhülse zum Eingriff in das Ende des Wellrohres 3 oder des Wellschlauches 2 bezeichnet ist.

Auch in den Figuren 33 bis 35 erkennt man, daß beide Wandungen 22 und 23 der Ringnut 21 zur Verengung zu dem Boden 24 hin schräg verlaufen. Es sei noch erwähnt, daß dabei auch ein etwas bogenförmiger Verlauf dieser Wandungen zur Verengung der Ringnut 21 oder auch ein abgestufter Verlauf möglich wäre.

In Fig. 33 ist ferner angedeutet, daß der größte Außendurchmesser des Innenstutzens 25 im Bereich des Nutengrundes 24 gleich oder kleiner als der Innendurchmesser des Wellschlauches 2 und der kleinste Durchmesser der Außenwandung 23 der Ringnut 21 im Bereich des Nutengrundes 24 vor allem kleiner als der Außendurchmesser des Wellschlauches 2 sind, so daß bei einem weiteren Einschieben des Wellschlauches 2 gegenüber der in Fig. 33 dargestellten Position dieser Schlauch zwar innen freibleibt, aber außen an der Wandung 23 aufläuft. Während also bei der in Fig. 33 dargestellten Position der Schlauch noch frei drehbar ist, kann er durch weiteres Einschieben, wobei der Vorsprung 10 dann in benachbarte Wellentäler 5 einrasten kann, zur Anlage an der Außenwandung 23 gebracht und dadurch auch abgedichtet und/oder auch in Drehrichtung festgelegt werden kann.

Fig. 34 zeigt demgegenüber eine Anordnung, bei der der kleinste Außendurchmesser des Innenstutzens 25 insbesondere an seiner Stirnseite 19 kleiner - gegebenenfalls gleich - dem Innendurchmesser des Wellschlauches 2 und der Außendurchmesser des Innenstutzens 25 an seinem Ende im Bereich des Nutengrundes 24 größer als der Innendurchmesser des Wellschlauches 2 ist und wobei der kleinste Durchmesser der Außenwandung 23 der Ringnut 21 im Bereich der Endlage des Wellschlauches 2 gleich oder größer als der Außendurchmesser des Wellschlauches ist. In diesem Falle läuft der Wellschlauch 2 beim Einschieben gemäß Fig. 34 mit seinem Innendurchmesser an der Wandung 22 auf, während er an der Außenwandung 23 freibleibt. Auch dadurch läßt sich eine Abdichtung und gegebenenfalls eine Festlegung erreichen.

Fig. 35 deutet schließlich eine Lösung an, bei der der größte Durchmesser der Innenwandung 22 der Ringnut 21 gleich oder größer als der Innendurchmesser des Wellschlauches 2 und der kleinste Durchmesser der Außenwandung 23 der Ringnut 21 gleich oder kleiner als der Außendurchmesser des Wellschlauches 2 sind, so daß dieser beim Einschieben in die in Fig. 35 dargestellte Position sowohl an der Innenwand 22 als auch an der Außenwand 23 aufläuft und zur Anlage kommt und dadurch eine gute Abdichtung erhält und in dieser dargestellten Postion auch gegen Verdrehung gesichert ist. Würde der Wellschlauch 2 gegenüber den Postionen, wie er in Fig. 34 und 35 dargestellt ist, zunächst um ein Wellental weniger tief eingeschoben, wäre er bei diesen beiden Ausführungsbeispielen jeweils drehbar.

Nicht dargestellt ist eine Lösung, bei der der größte Durchmesser der Innenwandung 22 der Ringnut 21 gleich oder kleiner und der kleinste Durchmesser der Außenwandung 23 gleich oder größer als der jeweilige Durchmesser des Wellschlauches 2 sind, so daß dieser selbst bei der größtmöglichen Einstecktiefe drehbar bleibt.

Es stehen also für unterschiedliche Forderungen und Anwendungsfälle entsprechende unterschiedliche Möglichkeiten zur Verfügung, wobei die erwähnte Drehbarkeit durch die Form des Vorsprunges 10 und der ihn tragenden Zunge 9 in Umfangsrichtung begünstigt wird. Insbesondere können die vorerwähnten unterschiedlichen Einstecktiefen durch die Zunge 9 und deren Vorsprung 10 gut erreicht werden, wobei die größeren Einstecktiefen mit dem entsprechend stärkeren Gegendruck in der schon beschriebenen vorteilhaften Weise dazu führen, daß durch die schräge Anordnung der Schlitze 12 der Vorsprung 10 umso fester in das jeweilige Wellental 5 eingreift.

## Patentansprüche

1. Anschlußarmatur (1) für umfangsgerippte Schläuche (2) oder Rohre (3), insbesondere für flexible Wellschläuche (2), mit quer zur Schlauchachse angeordneten parallelen Wellen (4) oder dergleichen, wobei die Anschlußarmatur (1) eine das Ende des Wellschlauches (2) oder Rohres (3) in sich aufnehmende Hülse (6) hat und in der Wandung (7) dieser Hülse (6) wenigstens eine gegen eine Rückstellkraft eines Federbereiches (8) nach außen in Lösestellung auslenkbare Zunge (9) mit einem in das Hülseninnere gerichteten Vorsprung (10) zum Eingriff in ein Wellental (5) des Wellschlauches (2) oder Wellrohres (3) oder in eine Umfangsnut eines sonst glatten Rohres für dessen axiale Festlegung vorgesehen ist, wobei diese Zunge (9) mit ihrem in das Hülseninnere gerichteten Vorsprung (10) und schlitzförmige Begrenzungen (12) ihrer Längsseiten etwa in Umfangsrichtung der Hülse (6) verlaufen, **dadurch gekennzeichnet,** daß wenigstens derjenige Begrenzeungsschlitz (12) zwischen Zunge (9) und Hülse (6), der dem Einsteckende (13) der Hülse (6) näherliegt, zumindest über einen Teilbereich der Umfangslänge der Zunge (9) von der Hülsenoberseite zum Hülseninneren schräg gegen das Einsteckende (13) hin in der Richtung zurückspringt, in welche die axiale Bewegung und Verstellung der Zunge (9) erfolgt.

2. Armatur nach Anspruch 1, dadurch gekennzeichnet, daß die Längsseiten der Zunge (9) und der Verlauf des vorzugsweise rippenförmigen Vorsprunges (10) etwa gleichgerichtet über einen Teil des Umfanges der Hülse (6) angeordnet sind.

3. Armatur nach Anspruch 1 oder 2, dadurch gekennzeichnet, daß zumindest der gelenkartige Federbereich (8) breiter oder schmaler als die in Umfangsrichtung von ihm weg verlaufende Zunge (9) ist, so daß die Zunge (9) in axialer Richtung stärker oder schwächer verschwenk- oder auslenkbar ist.

4. Armatur nach einem der Ansprüche 1 bis 3, dadurch gekennzeichnet, daß zumindest der Federbereich (8) im Querschnitt verändert, vorzugsweise vermindert ist.

5. Armatur nach einem der Ansprüche 1 bis 4, dadurch gekennzeichnet, daß die zum Einführende (13) der Hülse (6) weisende Seitenfläche (10a) des Vorsprunges (10) über wenigstens einen Teil seiner Querschnittshöhe schräg von außen nach innen und dabei von dem Einsteckende (13) weg verläuft.

6. Armatur nach einem der Ansprüche 1 bis 5, dadurch gekennzeichnet, daß der rippenförmige Vorsprung (10) von dem freien Ende der Zunge(9) zu dem Federbereich (8) hin in seiner Höhe abnimmt und/oder mit Abstand vor dem Federbereich (8) endet.

7. Armatur nach einem der Ansprüche 1 bis 6, dadurch gekennzeichnet, daß der Federbereich (8) der Zunge (9) bei axialer Belastung und Verstellung des Vorsprunges (10) bereichsweise aufwölbbar bzw. verwindbar und demgemäß das freie Ende der Zunge (9) mit dem Vorsprung (10) axial verschwenkbar ist

8. Armatur nach einem der Ansprüche 1 bis 7, dadurch gekennzeichnet, daß zumindest der Teilbereich der Umfangslänge der Zunge (9) schräg angeordnet ist, in welchem der rippenförmige Vorsprung (10) angeordnet ist.

9. Armatur nach einem der Ansprüche 1 bis 8, dadurch gekennzeichnet, daß beide Begrenzungen des Schlitzes (12) in gleicher Richtung schräg orientiert sind und vorzugsweise etwa parallel zueinander angeordnet sind.

10. Armatur nach einem der Ansprüche 1 bis 9, dadurch gekennzeichnet, daß die dem Einführende (13) der Hülse (6) abgewandte Anschlagfläche (10b) des Haltevorsprunges (10) im Querschnitt steiler als die andere Seitenfläche (10a), vorzugsweise rechtwinklig zur Innenwand (7) der Hülse (6) oder im spitzten Winkel zu dieser Innenseite (7) angeordnet ist.

11. Armatur nach einem der Ansprüche 1 bis 10, dadurch gekennzeichnet, daß die beiden Stirnflächen (10c) des Haltevorsprunges senkrecht und/oder schrägverlaufend sind, und der rippenartige Haltevorsprung (10) vorzugsweise erst bei axialer Belastung radial d.h. rechtwinklig zur Hülsenachse verläuft.

12. Armatur nach einem der Ansprüche 1 bis 11, dadurch gekennzeichnet, daß der schräg orientierte Begrenzungsschlitz (12) zwischen Zunge (9) und Hülse (6), der dem Einsteckende (13) der Hülse (6) näher liegt, schmaler ist, als die Auslenkbarkeit der Zunge (9) in axialer Richtung.

13. Armatur nach einem der Ansprüche 1 bis 12, dadurch gekennzeichent, daß beide in Umfangsrichtung verlaufenden Begrenzungsschlitze (12) der Zunge (9) schräg und dabei insbesondere parallel zueinander angeordnet sind und die Zunge dadurch auch axialbogenförmig ist.

14. Armatur nach einem der Ansprüche 1 bis 13, dadurch gekennzeichnet, daß an der Innenseite der Hülsenwand (7) etwa gegenüber der über einen Teilbereich des Umfanges verlaufenden Zunge (9) und insbesondere gegenüber von deren rippenartigem Vorsprung (10) eine feste Halterippe (14) mit vorzugsweise zu ihren beiden Enden hin sicher vermindernder Querschnittshöhe und insbesondere schräger Seitenfläche (14a) vorgesehen ist.

15. Armatur nach einem der Ansprüche 1 bis 14, dadurch gekennzeichnet, daß an der Zunge (9) in axialer Richtung hintereinander wenigstens zwei Haltevorsprunge (10, 16) vorgesehen sind, deren einer in seinem mittleren Bereich vorzugsweise eine Lücke (15) hat, die von dem in axialer Richtung daneben befindlichen Haltevorsprung überbrückt oder überlappt ist.

16. Armatur nach einem der Ansprüche 1 bis 15, dadurch gekennzeichnet, daß die Umfangslänge des Vorsprunges (10) wenigstens etwa ein Fünftel, ein Viertel oder ein Drittel des Innendurchmessers der Hülse (6) beträgt und vorzugsweise nur eine einzige Zunge (9) vorgesehen ist.

17. Armatur nach einem der Ansprüche 1 bis 16, dadurch gekennzeichnet, daß die Umfangslänge des rippenförmigen Vorsprunges (10) ungefähr gleich dem Durchmesser der Hülse (6) ist oder etwa dem halben Umfang der Hülse (6) entspricht oder über mehr als den halben Umfang der Haltehülse (6) reicht.

18. Armatur nach einem der Ansprüche 1 bis 17, dadurch gekennzeichnet, daß wenigstens zwei etwa in Umfangsrichtung der Hülse (6) orientierte Zungen (9), vorzugsweise gegenläufig an der Hülse (6) angeordnet sind.

19. Armatur nach einem der Ansprüche 1 bis 18, dadurch gekennzeichnet, daß die am freien Ende der Zunge (9) befindliche stirnseitige Fläche (17) insbesondere unter spitzem Winkel zur Hülseninnenseite, also entgegen einer Anhebehilfe ausgebildet ist.

20. Armatur nach einem der Ansprüche 1 bis 19, dadurch gekennzeichnet, daß im Inneren der Hülse (6) ein Innenanschlag (19) für die Stirnseite des Wellschlauches (2) oder -rohres (3) vorgesehen ist und daß der Abstand der federnden Zunge (9) und ihrer Schlitzbegrenzungen von dem Stirnanschlag (19) für den Schlauch (2) oder das Rohr (3) so groß gewählt ist, daß eine Welle (4) und ein Wellental (5) des Schlauches oder Rohres dazwischen passen.

21. Armatur nach einem der Ansprüche 1 bis 20, dadurch gekennzeichnet, daß der Innenanschlag(19) der Hülse (6) eine ringnutförmige Einsenkung als Ringnut (21) aufweist, und vorzugsweise wenigstens eine der Nutenwände (22, 23) zumindest bereichsweise, in Einsteckrichtung des Wellschlauches (2) oder Rohres (3) im Sinne einer Verengung der Nut (21) zu ihrem Boden (24) hin schräg oder bogenförmig oder abgestuft verläuft, wobei die radial äußere Nutenwand (23) und/oder die radial innere Nutenwand (22) als Schlauchanschlag in axialer Richtung vorgesehen ist.

22. Armatur nach einem der Ansprüche 1 bis 21, dadurch gekennzeichnet, daß die innere Nutenwand (22) einen Innenstutzen (25) begrenzt und als Stützhülse zum Eingriff in das Ende des Wellrohres (3) oder -schlauches (2) insbesondere verlängert und vorzugsweise konisch ist, wobei sie sich in Einsteckrichtung von ihrem freien Ende zum Nutengrund (24) erweitert und wobei diese Verlängerung vorzugsweise in oder über den Bereich des oder der die Zunge begrenzenden Schlitze (12) ragt.

23. Armatur nach einem der Ansprüche 1 bis 22, dadurch gekennzeichnet, daß der kleinste Außendurchmesser des Innenstutzens (25), insbesondere an seiner Stirnseite (19), kleiner oder gleich dem Innendurchmesser desjenigen Wellschlauches (2) und der Außendurchmesser des Innenstutzens (25) an seinem Ende im Bereich des Nutengrundes (24) größer als der Innendurchmesser desjenigen Wellschlauches (2) ist und daß der kleinste Durchmesser der Außenwandung (23) der Ringnut (21) gleich oder größer als der Außendurchmesser desjenigen Wellschlauches (2) ist, für welchen die Armatur (1) vorgesehen ist.

24. Armatur nach einem der Ansprüche 1 bis 23, dadurch gekennzeichnet, daß der größte Außendurchmesser des Innen-stutzens (25) im Bereich des Nutengrundes (24) gleich oder kleiner als der Innendurchmessen desjenigen Wellschlauches (2) und der kleinste Durchmesser der Außenwandung (23) der Ringnut (21) im Bereich des Nutengrundes (24) gleich oder kleiner als der Außendurchmesser desjenigen Wellschlauches (2) sind, für den die Armatur (1) vorgesehen ist.

25. Armatur nach einem der Ansprüche 1 bis 24, dadurch gekennzeichnet, daß der größte Durchmesser der Innenwandung (22) der Ringnut (21) gleich oder größer als der Innendurchmesser desjenigen Wellschlauches (2) und der kleinste Durchmesser der Außenwandung (23) der Ringnut (21) gleich oder kleiner als der Außendurchmesser desjenigen Wellschlauches (2) sind, für den die Armatur (1) vorgesehen ist.

26. Armatur nach einem der vorstehenden Ansprüche, dadurch gekennzeichnet, daß der größte Durchmesser der Innenwandung (22) der Ringnut (21) gleich oder kleiner und der kleinste Durchmesser der Außenwandung (23) gleich oder größer als der jeweilige Durchmesser desjenigen Wellschlauches (2) sind, für den die Armatur (1) vorgesehen ist.

## Claims

1. A connection accouterment, hereinafter referred to as a connector (1), for circumferentially corrugated hoses (2) or pipes (3), particularly for flexible corrugated hoses (2) having parallel corrugations (4) or the like arranged transversely to the hose axis, the connector (1) having a sleeve (6) receiving therein the end of the corrugated hose (2) or pipe (3) and provided in the wall (7) of said sleeve (6) there being at least one tongue (9) which is deflectable outwardly into a release position against a restoring force of a spring area (8) and has a projection (10), said projection being directed into the interior of the sleeve and serving for engagement with a corrugation furrow (5) of the corrugated hose (2) or corrugated pipe (3) or with a circumferential groove of an otherwise smooth pipe for axially locating the same, said tongue (9) with the projection (10) thereof directed into the interior of the sleeve and slits (12) defining the longitudinal sides of said tongue running approximately in a circumferential direction of the sleeve (6), **characterized in that** at least that defining slit (12) between tongue (9) and sleeve (6) which is closer to the insertion end (13) of the sleeve (6) recedes slantwise at least over a partial area of the circumferential length of the tongue (9), from the sleeve surface to the sleeve interior, towards the insertion end (13) in the direction in which the axial movement and displacement of the tongue (9) takes place.

2. A connector as claimed in claim 1 , characterized in that the longitudinal sides of the tongue (9) and the path of the preferably rib-like projection (10) are arranged so as to be approximately equidirectional over part of the circumference of the sleeve (6).

3. A connector as claimed in claim 1 or claim 2, characterized in that at least the joint-like spring area (8) is wider or narrower than the tongue (9) departing therefrom in a circumferential direction, so that the tongue (9) is adapted to swing or deflect in an axial direction to a greater or lesser extent.

4. A connector as claimed in any one of claims 1 to 3, characterized in that at least the spring area (8) is changed, preferably reduced, in cross section.

5. A connector as claimed in any one of claims 1 to 4, characterized in that that side face (10a) of the projection (10) which points to the entry end (13) of the sleeve (6) slants from the outside to the inside over at least part of the cross-sectional height of said projection and in so doing runs away from the insertion end (13).

6. A connector as claimed in any one of claims 1 to 5, characterized in that the rib-like projection (10) diminishes in its height from the free end of the tongue (9) towards the spring area (8) and/or ends at a distance in front of the spring area (8).

7. A connector as claimed in any one of claims 1 to 6, characterized in that the spring area (8) of the tongue (9) is capable of bulging or distorting in areas upon axial load and displacement of the projection (10), and accordingly the free end of the tongue (9) along with the projection (10) is adapted to swing axially.

8. A connector as claimed in any one of claims 1 to 7, characterized in that at least that partial area of the circumferential length of the tongue (9) in which the rib-like projection (10) is disposed is arranged at a slant.

9. A connector as claimed in any one of claims 1 to 8, characterized in that both boundaries of the slit (12) are oriented slantwise in the same direction and preferably are arranged approximately parallel to each other.

10. A connector as claimed in any one of claims 1 to 9, characterized in that that stop face (10b) of the retaining projection (10) which is averted from the entry end (13) of the sleeve (6) is steeper in cross section than the other side face (10a) and preferably is arranged at right angles to the inner wall (7) of the sleeve (6) or at an acute angle to said inside (7).

11. A connector as claimed in any one of claims 1 to 10, characterized in that the two faces (10c) of the retaining projection are vertical and/or slanting, and the rib-like retaining projection (10) preferably runs radially, i. e. at right angles to the axis of the sleeve, only upon axial load.

12. A connector as claimed in any one of claims 1 to 11, characterized in that that slantwise oriented defining slit (12) between tongue (9) and sleeve (6) which is closer to the insertion end (13) of the latter is narrower than the deflectability of the tongue (9) in an axial direction.

13. A connector as claimed in any one of claims 1 to 12, characterized in that both slits (12) defining the tongue (9) and running in a circumferential direction are arranged slantwise and particularly parallel to each other and thereby the tongue is also curved axially.

14. A connector as claimed in any one of claims 1 to 13, characterized in that provided at the inside of the wall (7) of the sleeve, approximately opposite the tongue (9) running over a partial area of the circumference and particularly opposite the rib-like projection (10) of said tongue, there is a firm retaining rib (14), preferably one reducing in cross-sectional height towards the two ends of the rib and in particular having a slanting side face (14a).

15. A connector as claimed in any one of claims 1 to 14, characterized in that at least two retaining projections (10, 16) are provided on the tongue (9), one behind the other in an axial direction, one of which preferably has in its centre area a gap (15) bridged or overlapped by the retaining projection situated beside it in an axial direction.

16. A connector as claimed in any one of claims 1 to 15, characterized in that the circumferential length of the projection (10) is at least about a fifth, a quarter or a third of the inside diameter of the sleeve (6) and preferably only one single tongue (9) is provided.

17. A connector as claimed in any one of claims 1 to 16, characterized in that the circumferential length of the rib-like projection (10) is about equal to the diameter of the sleeve (6) or approximates half the circumference of the sleeve (6) or extends over more than half the circumference of the retaining sleeve (6).

18. A connector as claimed in any one of claims 1 to 17, characterized in that at least two tongues (9) oriented approximately in a circumferential direction of the sleeve (6) are arranged preferably in opposite directions on the sleeve (6).

19. A connector as claimed in any one of claims 1 to 18, characterized in that the surface (17) situated on the face at the free end of the tongue (9) is configured particularly at an acute angle to the inside of the sleeve, hence contrary to a lifting aid.

20. A connector as claimed in any one of claims 1 to 19, characterized in that inside the sleeve (6) provision is made for an inside stop (19) for the front end of the corrugated hose (2) or corrugated pipe (3) , and the distance of the springy tongue (9) and defining slits (9) thereof from the end stop (19) for the hose (2) or pipe (3) is selected to be so large that a corrugation (4) and a corrugation furrow (5) of the hose or pipe fit therebetween.

21. A connector as claimed in any one of claims 1 to 20, characterized in that the inside stop (19) of the sleeve (6) has an annular groove-shaped depression as an annular groove (21), and preferably at least one of the walls (22, 23) of the groove takes a slanting or curved or stepped course, at least in areas, in the direction of insertion of the corrugated hose (2) or pipe (3), to narrow the groove (21) towards the base (24) of said groove, the radially outer wall (23) of the groove and/or the radially inner wall (22) of the groove being provided as a stop for the hose in an axial direction.

22. A connector as claimed in any one of claims 1 to 21, characterized in that the inner wall (22) of the groove defines an inner connecting piece (25) and in particular is extended and preferably is conical as a support sleeve for engagement with the end of the corrugated pipe (3) or corrugated hose (2), said sleeve widening in the direction of insertion from the free end thereof to the base (24) of the groove and said extension preferably projecting to or beyond the area of the slit(s) (12) defining the tongue.

23. A connector as claimed in any one of claims 1 to 22, characterized in that the smallest outside diameter of the inner connecting piece (25), particularly at the end face (19) thereof, is smaller than or equal to the inside diameter of that corrugated hose (2), and the outside diameter of the inner connecting piece (25) at the end thereof in the area of the base (24) of the groove is greater than the inside diameter of that corrugated hose (2), and the smallest diameter of the outer wall (23) of the annular groove (21) is equal to or greater than the outside diameter of that corrugated hose (2) for which the connector (2) is intended.

24. A connector as claimed in any one of claims 1 to 23, characterized in that the largest outside diameter of the inner connecting piece (25) in the area of the base (24) of the groove is equal to or smaller than the inside diameter of that corrugated hose (2), and the smallest diameter of the outer wall (23) of the annular groove (21) in the area of the base (24) of the groove is equal to or smaller than the outside diameter of that corrugated hose (2) for which the connector (1) is intended.

25. A connector as claimed in any one of claims 1 to 24, characterized in that the largest diameter of the inner wall (22) of the annular groove (21) is equal to or greater than the inside diameter of that corrugated hose (2), and the smallest diameter of the outer wall (23) of the annular groove (21) is equal to or smaller than the outside diameter of that corrugated hose (2) for which the connector (1) is intended.

26. A connector as claimed in any one of the preceding claims, characterized in that the largest diameter of the smaller than (22) of the annular groove (21) is equal to or smaller than and the smallest diameter of the outer wall (23) is equal to or greater than the respective diameter of that corrugated hose (2) for which the connector (1) is intended.

## Revendications

1. Pièce de raccordement (1) pour des tuyaux souples (2) ou des tubes (3) à cannelures circonférentielles, notamment pour des tuyaux souples ondulés (2), présentant des ondulations parallèles (4) ou similaires, disposées transversalement à l'axe du tuyau souple, la pièce de raccordement (1) possédant un manchon (6) dans lequel est reçue l'extrémité du tuyau souple ondulé (2) ou du tube (3), et au moins une languette (9) étant prévue dans la paroi (7) de ce manchon (6), la languette (9) pouvant être déviée vers l'extérieur en position de dégagement contre une force de rappel d'une région élastique (8) et étant dotée d'une partie en saillie (10) dirigée vers l'intérieur du manchon et destinée à s'engager dans un creux d'ondulation (5) du tuyau souple ondulé (2) ou du tube ondulé (3), ou dans une rainure circonférentielle d'un tube autrement lisse, en vue de sa fixation axiale, cette languette (9) s'étendant, par sa partie en saillie (10) dirigée vers l'intérieur du manchon et par des délimitations (12) en forme de fentes de ses côtés longitudinaux, approximativement dans la direction circonférentielle du manchon (6), **caractérisée** en ce qu'au moins la fente de délimitation (12) entre la languette (9) et le manchon (6) qui est la plus proche de l'extrémité d'emboîtement (13) du manchon (6), recule en oblique en direction de l'extrémité d'emboîtement (13), depuis le côté supérieur du manchon vers l'intérieur du manchon, au moins sur une partie de la longueur circonférentielle de la languette (9), dans la direction dans laquelle a lieu le mouvement et déplacement axial de la languette (9).

2. Pièce de raccordement selon la revendication 1, **caractérisée** en ce que les côtés longitudinaux de la languette (9) et la partie en saillie (10), de préférence en forme de nervure, s'étendent sur une partie de la circonférence du manchon (6) en étant orientés approximativement dans la même direction.

3. Pièce de raccordement selon la revendication 1 ou 2, **caractérisée** en ce qu'au moins la région élastique du genre articulation (8) est plus large ou plus étroite que la languette (9) qui s'en éloigne en direction circonférentielle, de sorte que la languette (9) peut être plus ou moins fortement pivotée ou déviée en direction axiale.

4. Pièce de raccordement selon l'une quelconque des revendications 1 à 3, **caractérisée** en ce que la section d'au moins la région élastique (8) est modifiée, de préférence réduite.

5. Pièce de raccordement selon l'une quelconque des revendications 1 à 4, **caractérisée** en ce que la face latérale (10a) de la partie en saillie (10) qui est tournée vers l'extrémité d'introduction (13) du manchon (6) s'étend en oblique de l'extérieur vers l'intérieur sur au moins une partie de la hauteur de section de la partie en saillie (10), en s'éloignant alors de l'extrémité d'emboîtement (13).

6. Pièce de raccordement selon l'une quelconque des revendications 1 à 5, **caractérisée** en ce que la partie en saillie (10) en forme de nervure diminue de hauteur depuis l'extrémité libre de la languette (9) vers la région élastique (8) et/ou se termine à distance avant la région élastique (8).

7. Pièce de raccordement selon l'une quelconque des revendications 1 à 6, **caractérisée** en ce que la région élastique (8) de la languette (9) peut être partiellement bombée ou déformée en cas de sollicitation et de déplacement axial de la partie en saillie (10), de sorte que l'extrémité libre de la languette (9) munie de la partie en saillie (10) peut être pivotée axialement.

8. Pièce de raccordement selon l'une quelconque des revendications 1 à 7, **caractérisée** en ce qu'au moins la partie de la longueur circonférentielle de la languette (9) dans laquelle se trouve la partie en saillie (10) en forme de nervure, est disposée en oblique.

9. Pièce de raccordement selon l'une quelconque des revendications 1 à 8, **caractérisée** en ce que les deux délimitations de la fente (12) sont orientées en oblique dans la même direction et sont de préférence disposées approximativement en parallèle.

10. Pièce de raccordement selon l'une quelconque des revendications 1 à 9, **caractérisée** en ce que la face de butée (10b) de la partie en saillie de retenue (10) qui est éloignée de l'extrémité d'introduction (13) du manchon (6) est disposée, en coupe transversale, avec une inclinaison plus raide que l'autre face latérale (10a), de préférence perpendiculairement à la paroi intérieure (7) du manchon (6) ou sous un angle aigu par rapport à ce côté intérieur (7).

11. Pièce de raccordement selon l'une quelconque des revendications 1 à 10, **caractérisée** en ce que les deux faces frontales (10c) de la partie en saillie de retenue s'étendent perpendiculairement et/ou en oblique, et la partie en saillie de retenue (10) du genre nervure, de préférence, ne s'étend radialement, c'est-à-dire perpendiculairement à l'axe du manchon, qu'en cas de sollicitation axiale.

12. Pièce de raccordement selon l'une quelconque des revendications 1 à 11, **caractérisée** en ce que la fente de délimitation (12) entre la languette (9) et le manchon (6), orientée en oblique, qui est la plus proche de l'extrémité d'emboîtement (13) du manchon (6), est plus étroite que la faculté de déviation de la languette (9) en direction axiale.

13. Pièce de raccordement selon l'une quelconque des revendications 1 à 12, **caractérisée** en ce que les deux fentes de délimitation (12) de la languette (9) qui s'étendent en direction circonférentielle sont disposées en oblique et notamment parallèlement entre elles, de sorte que la languette est axialement arquée.

14. Pièce de raccordement selon l'une quelconque des revendications 1 à 13, **caractérisée** en ce qu'une nervure de retenue fixe (14), présentant une face latérale (14a) dont, de préférence, la hauteur de section diminue nettement vers les deux extrémités et qui est notamment oblique, est prévue sur le côté intérieur de la paroi (7) du manchon approximativement en vis-à-vis de la languette (9) s'étendant sur une partie de la circonférence, et notamment en vis-à-vis de sa partie en saillie (10) du genre nervure.

15. Pièce de raccordement selon l'une quelconque des revendications 1 à 14, **caractérisée** en ce qu'au moins deux parties en saillie de retenue (10, 16) sont prévues en succession axiale sur la languette (9), l'une d'entre elles possédant de préférence, dans sa région centrale, une lacune (15) qui est comblée ou recouverte par la partie en saillie de retenue axialement voisine.

16. Pièce de raccordement selon l'une quelconque des revendications 1 à 15, **caractérisée** en ce que la longueur circonférentielle de la partie en saillie de retenue (10) est égale à au moins environ un cinquième, un quart ou un tiers du diamètre intérieur du manchon (6), et une seule languette (9) est de préférence prévue.

17. Pièce de raccordement selon l'une quelconque des revendications 1 à 16, **caractérisée** en ce que la longueur circonférentielle de la partie en saillie (10) en forme de nervure est approximativement égale au diamètre du manchon (6) ou correspond environ à la moitié de la circonférence du manchon (6) ou s'étend sur plus de la moitié de la circonférence du manchon de retenue (6).

18. Pièce de raccordement selon l'une quelconque des revendications 1 à 17, **caractérisée** en ce qu'au moins deux languettes (9) orientées approximativement dans la direction circonférentielle du manchon (6) sont disposées, de préférence en sens contraires, sur le manchon (6).

19. Pièce de raccordement selon l'une quelconque des revendications 1 à 18, **caractérisée** en ce que la face frontale (17) présente à l'extrémité libre de la languette (9) est notamment configurée sous un angle aigu par rapport au côté intérieur du manchon, donc à l'encontre d'une aide au soulèvement.

20. Pièce de raccordement selon l'une quelconque des revendications 1 à 19, **caractérisée** en ce qu'une butée intérieure (19) pour le côté frontal du tuyau souple ondulé (2) ou du tube ondulé (3) est prévue à l'intérieur du manchon (6), et en ce que la distance entre la fente de délimitation de la languette élastique (9) et la butée frontale (19) pour le tuyau souple (2) ou le tube (3) est choisie suffisamment grande pour qu'une ondulation (4) et un creux d'ondulation (5) du tuyau souple ou du tube puissent y prendre place.

21. Pièce de raccordement selon l'une quelconque des revendications 1 à 20, **caractérisée** en ce que la butée intérieure (19) du manchon (6) présente un renfoncement en forme de rainure annulaire (21) et, de préférence, au moins une des parois (22, 23) de la rainure s'étend, au moins partiellement, en oblique ou en coude ou en gradin dans la direction d'emboîtement du tuyau souple ondulé (2) ou du tube (3) afin de rétrécir la rainure (21) vers son fond (24), la paroi radialement extérieure (23) et/ou la paroi radialement intérieure (22) de la rainure étant prévue comme butée pour le tuyau souple en direction axiale.

22. Pièce de raccordement selon l'une quelconque des revendications 1 à 21, **caractérisée** en ce que la paroi intérieure (22) de la rainure délimite un soutien intérieur (25) et est notamment prolongée sous la forme d'un manchon de soutien, de préférence conique, destiné à s'engager dans l'extrémité du tube ondulé (3) ou du tuyau souple ondulé (2), et elle s'élargit dans la direction d'emboîtement depuis son extrémité libre vers le fond (24) de la rainure, ce prolongement dépassant de préférence dans ou au-dessus de la région de la ou des fentes (12) délimitant la languette.

23. Pièce de raccordement selon l'une quelconque des revendications 1 à 22, **caractérisée** en ce que le diamètre extérieur minimal du soutien intérieur (25), notamment sur son côté frontal (19), est inférieur ou égal au diamètre intérieur du tuyau souple ondulé (2) pour lequel est prévue la pièce de raccordement (1), et le diamètre extérieur du soutien intérieur (25), à son extrémité dans la région du fond (24) de la rainure, est supérieur au diamètre intérieur de ce tuyau souple ondulé (2), et en ce que le diamètre minimal de la paroi extérieure (23) de la rainure annulaire (21) est supérieur ou égal au diamètre extérieur de ce tuyau souple ondulé (2).

24. Pièce de raccordement selon l'une quelconque des revendications 1 à 23, **caractérisée** en ce que le diamètre extérieur maximal du soutien intérieur (25) dans la région du fond (24) de la rainure est inférieur ou égal au diamètre intérieur du tuyau souple ondulé (2) pour lequel est prévue la pièce de raccordement (1), et le diamètre minimal de la paroi extérieure (23) de la rainure annulaire (21) est inférieur ou égal au diamètre extérieur de ce tuyau souple ondulé (2).

25. Pièce de raccordement selon l'une quelconque des revendications 1 à 24, **caractérisée** en ce que le diamètre maximal de la paroi intérieure (22) de la rainure annulaire (21) est supérieur ou égal au diamètre intérieur du tuyau souple ondulé (2) pour lequel est prévue la pièce de raccordement (1), et le diamètre minimal de la paroi extérieure (23) de la rainure annulaire (21) est inférieur ou égal au diamètre extérieur de ce tuyau souple ondulé (2).

26. Pièce de raccordement selon l'une quelconque des revendications précédentes, **caractérisée** en ce que le diamètre maximal de la paroi intérieure (22) de la rainure annulaire (21) est inférieur ou égal, et le diamètre minimal de la paroi extérieure (23) supérieur ou égal, au diamètre respectif du tuyau souple ondulé (2) pour lequel est prévue la pièce de raccordement (1).
